(19) Europäisches Patentamt
European Patent Office
Office européen des brevets

(11) EP 4 815 523 A1

(12) **EUROPEAN PATENT APPLICATION**
published in accordance with Art. 153(4) EPC

(43) Date of publication:
**30.09.2026 Bulletin 2026/40**

(21) Application number: **24897929.6**

(22) Date of filing: **04.11.2024**

(51) International Patent Classification (IPC):
***H04W 4/90*** *(2018.01)* ***H04W 48/10*** *(2009.01)*
***H04W 68/02*** *(2009.01)* ***H04J 11/00*** *(2006.01)*
***H04W 88/08*** *(2009.01)* ***H04W 76/50*** *(2018.01)*

(52) Cooperative Patent Classification (CPC):
**H04W 4/90; H04J 11/00; H04W 48/10; H04W 68/02; H04W 76/50; H04W 88/08**

(86) International application number:
**PCT/KR2024/017218**

(87) International publication number:
**WO 2025/116332 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2023 KR 20230170218**
**22.12.2023 KR 20230190493**

(71) Applicant: **Samsung Electronics Co., Ltd.**
**Suwon-si, Gyeonggi-do 16677 (KR)**

(72) Inventors:
- **NAM, Hyeongmin**
  **Suwon-si, Gyeonggi-do 16677 (KR)**
- **OH, Sangrok**
  **Suwon-si, Gyeonggi-do 16677 (KR)**
- **KO, Eunseok**
  **Suwon-si, Gyeonggi-do 16677 (KR)**
- **KU, Hyungwoo**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) ELECTRONIC DEVICE AND METHOD FOR TRANSMITTING WARNING MESSAGE IN WIRELESS COMMUNICATION SYSTEM

(57) An electronic device may comprise a memory that stores instructions, and at least one processor. The instructions, when executed by the at least one processor, may cause the electronic device to: receive a first request message for broadcasting a first warning message of system information for a public warning system; in response to the first request message, transmit first segments of the first warning message on a cell during a first transmission period corresponding to two modification periods; on the basis of receiving a second request message for broadcasting a second warning message of the system information in the first transmission period, determine whether or not all available system information windows are in use; if all the available SI windows are in use, store the second warning message in a buffer; and after all the first segments of the first warning message are transmitted, transmit second segments of the second warning message on the cell during a second transmission period corresponding to the two modification periods.

110
120
FIG. 1

EP 4 815 523 A1

## Description

### [Technical Field]

The present disclosure relates to a wireless communication system. More specifically, the present disclosure relates to an electronic device and a method for transmitting a warning message in a wireless communication system.

### [Background Art]

When a disaster occurs, information on the disaster or response information may be provided to a user in order to minimize damage to life and property. In order to provide the user with the information on the disaster or the response information, a public warning system (PWS) is defined in a 3rd Generation Partnership Project (3GPP).

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise memory storing instructions, and at least one processor. The instructions may cause, when executed by the at least one processor, the electronic device to receive a first request message for broadcast of a first warning message of system information for a public warning system (PWS), transmit first segments of the first warning message on a cell during a first transmission period corresponding to two modification periods, in response to the first request message, based on receiving a second request message for broadcast of a second warning message of the system information in the first transmission period, determine whether all of available system information (SI) windows are in use or not, in a case that all of the available SI windows are in use, store the second warning message in a buffer, and after all of the first segments of the first warning message are transmitted, transmit second segments of the second warning message on the cell during a second transmission period corresponding to the two modification periods.

In embodiments, an electronic device is provided. The electronic device may comprise memory storing instructions, and at least one processor. The instructions may cause, when executed by the at least one processor, the electronic device to receive a first request message for broadcast of a first warning message of system information for a public warning system (PWS), receive a second request message for broadcast of a second warning message of the system information for the PWS, in a case that the first warning message corresponds to a warning message which is first in progress on a cell, transmit the first warning message and at least one repetition warning message corresponding to the first warning message on the cell during a first transmission period, and after all of the first warning message and the at least one repetition warning message are transmitted, transmit second segments of the second warning message on the cell during a second transmission period next to the first transmission period. Each message of the first warning message and the at least one repetition warning message corresponding to the first warning message may include first segments equally.

In embodiments, an electronic device is provided. The electronic device may include memory storing instructions, and at least one processor. The instructions may cause, when executed by the at least one processor, the electronic device to receive a first request message for broadcast of a first warning message of system information for a public warning system (PWS), receive a second request message for broadcast of a second warning message of the system information for the PWS, in a case that the first warning message corresponds to a warning message which is first in progress on a cell, transmit repetition segments corresponding to a reference segment of first segments of the first warning message on the cell, after the repetition segments are transmitted, transmit the first segments of the first warning message on the cell, and after all of the repetition segments and the first segments of the first warning message are transmitted, transmit second segments of the second warning message on the cell.

### [Description of the Drawings]

FIG. 1 illustrates a wireless communication system.
FIG. 2A illustrates an example of function split according to a communication protocol.
FIG. 2B illustrates an example of components of an electronic device.

FIG. 3 illustrates an example of a resource structure in a time domain and a frequency domain.
FIG. 4 illustrates an example of channels in a communication standard.
FIG. 5A illustrates an example of signaling for transmitting system information for a public warning system (PWS).
FIG. 5B illustrates examples of system information for a public warning system (PWS).
FIG. 6A illustrates an example of a warning request procedure in an F1 interface.
FIG. 6B illustrates an example of a warning message, segments, and setting parameters in an F1 interface.
FIG. 7A and FIG. 7B illustrate examples of signaling for transmission of a single warning message.
FIG. 8A and FIG. 8B illustrate examples of signaling for transmission of a plurality of warning messages.
FIG. 9A and FIG. 9B illustrate examples of transmission of warning messages according to overlapping scheduling.
FIG. 10 illustrates an example of transmission of warning messages according to non-overlapping scheduling.
FIG. 11 illustrates an example of transmission of warning messages according to non-overlapping scheduling using a concurrent warning buffer.
FIG. 12 illustrates an example of transmission of warning messages according to non-overlapping scheduling using repetition of a warning message.
FIG. 13 illustrates an example of transmission of warning messages according to non-overlapping scheduling using repetition of a segment.
FIG. 14 illustrates an operation of an electronic device for non-overlapping scheduling using a concurrent warning buffer.
FIG. 15 illustrates an operation of an electronic device for non-overlapping scheduling using repetition of a warning message.
FIG. 16 illustrates an operation of an electronic device for non-overlapping scheduling using repetition of a segment.
FIG. 17 illustrates examples of non-overlapping scheduling.
FIG. 18 illustrates an example of components of an electronic device for non-overlapping scheduling.

[**Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a data type (e.g., a list, a set, or a subset), a term for a computation state (e.g., a step, an operation, or a procedure), a term referring to data (e.g., a packet, a user stream, information, a bit, a symbol, or a codeword), a term referring to a resource (e.g., a symbol, a slot, a subframe, a radio frame, a subcarrier, a resource element (RE), a resource block (RB), a bandwidth part (BWP), or an occasion), a term referring to a channel, a term referring to network entities (e.g., a node, a network entity, an entity, or a unit), a term referring to a component of a device, and the like used in the following descriptions are exemplified for convenience of description. Therefore, the present disclosure is not limited to terms described below, and another term having an equivalent technical meaning may be used.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for an operation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C'

and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), European Telecommunications Standards Institute (ETSI), extensible radio access network (xRAN), open-radio access network (O-RAN)), these are only examples for explanation. The various embodiments of the present disclosure may be easily modified and applied to other communication systems.

The effects that can be obtained from the present disclosure are not limited to those described above, and any other effects not mentioned herein will be clearly understood by those having ordinary knowledge in the art to which the present disclosure belongs.

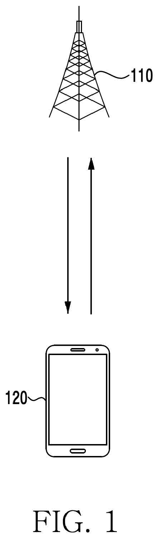

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be MTC UE or a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

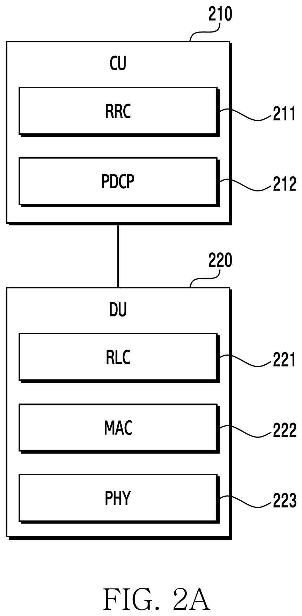

FIG. 2A illustrates an example of function split according to a communication protocol. A base station (e.g., a

base station 110) may operate as an eNB or a gNB according to a provided radio access technology (RAT). For example, the base station may be referred to as an NG-RAN node. The base station may be implemented as a distributed deployment according to a centralized unit (CU) configured to perform a function of upper layers (e.g., packet data convergence protocol (PDCP) and radio resource control (RRC)) of an access network and a distributed unit (DU) configured to perform a function of lower layers.

Referring to FIG. 2A, a CU 210 may be connected to one or more DUs (e.g., a DU 220), and may be responsible for a function of a layer higher than the DU. For example, the CU 210 may be responsible for functions of a radio resource control (RRC) layer 211 and a packet data convergence protocol (PDCP) layer 212. The CU 210 may transmit a message to, or receive a message from the DU 220 through an F1 interface. The DU 220 may be responsible for functions of a radio link control (RLC) layer 221, a media access control (MAC) layer 222, and a physical (PHY) layer 223.

A main function of the RRC layer 212 may include a portion of the following functions.

- Access Stratum (AS) and NAS-related system information broadcast
- Paging initiated by a 5G Core (5GC) or a Next Generation-Radio Access Network (NG-RAN)
- Establishment, maintenance, and release of an RRC connection between a UE and an NG-RAN including the following, and more specifically, including control for RLC, MAC, and PHY:
- Addition, modification, and release of Carrier Aggregation
- Addition, modification, and release of dual connectivity between NR or E-UTRA and NR.
- Security function including Key Management;
- Establishment, configuration, maintenance, and release of Signaling Radio Bearer (SRB) and Data Radio Bearer (DRB)
- Mobility function including the following:
- Handover and context transfer;
- Control of UE cell selection and reselection and cell selection and reselection;
- Inter-RAT mobility.
- Quality of service (QoS) management function;
- UE measurement reporting and control of the reporting;
- Radio link failure detection and recovery
- Message transfer from/to a UE to/from NAS.

A main function of a PDCP layer 213 may include a portion of the following functions.

- Header compression and decompression: ROHC only;
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

A main function of the RLC layer 221 may include a portion of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The MAC layer 222 may be connected to several RLC layer devices configured in one UE, and a main function of the MAC may include a portion of the following functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The DU 220 may, through the PHY layer 223, perform an operation of channel coding and modulating upper-layer data, and generating OFDM symbols from it and transmitting them through a wireless channel, or demodulating and channel decoding OFDM symbols received through a wireless channel and delivering it to an upper layer.

Although FIG. 2A illustrates that the DU 220 is responsible for the physical layer 223, embodiments of the present disclosure are not limited thereto. According to an implementation example, the DU 220 may perform some functions (high PHY) of the physical layer 223, and an RU connected to the DU 220 may be responsible for remaining functions (low PHY) of the physical layer 223. In addition, as an example, a digital unit (DU) may be included in the distributed unit (DU) 220 according to a distributed deployment implementation of a base station. As a non-limiting example, the digital unit (DU) may indicate an entity including a CU and a distributed unit (DU), in a structure disposed in an order of the CU, the distributed unit (DU), and an RU. Hereinafter, operations of the CU 210 and the DU 220 are described unless separately defined, but various embodiments of the present disclosure may be applied to both a base station deployment including a CU or a deployment in which a DU is directly connected to a core network (i.e., implemented by integrating a CU and a DU into one entity, which is a base station (e.g., an NG-RAN node)).

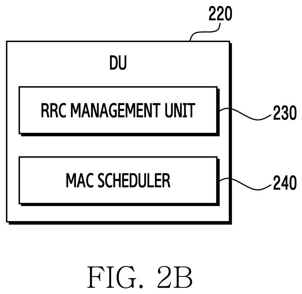

FIG. 2B illustrates an example of components of an electronic device (e.g., the base station 110 or the DU 220). A configuration exemplified in FIG. 2B may be understood as a configuration of the base station 110 or the DU 220 which is a portion of the base station 110. Terms such as '...unit', '...device', and the like used hereinafter may mean a unit for processing at least one function or operation, which may be implemented as hardware or software, or a combination of hardware and software.

Referring to FIG. 2B, the DU 220 may include an RRC management unit 230 and a MAC scheduler 240. The RRC management unit 230 may be configured to manage messages of an RRC layer (e.g., the RRC layer 211). The DU 220 may receive a message of the RRC layer (e.g., a system information (SI) message or an SIB1 message) from the CU 210. For example, the DU 220 may receive the message of the RRC layer from the CU 210 through an F1 interface. The RRC management unit 230 may provide the message of the RRC layer or information included in the message to the MAC scheduler 240.

The MAC scheduler 240 may obtain the message of the RRC layer or the information included in the message. The MAC scheduler 240 may schedule the message of the RRC layer. For example, the MAC scheduler 240 may determine which SI message is to be transmitted in a specific interval according to a designated periodicity (e.g., a periodicity of the SI message). The MAC scheduler 240 may schedule other messages (e.g., SI messages) according to the information in the message of the RRC layer (e.g., scheduling information of SIBs).

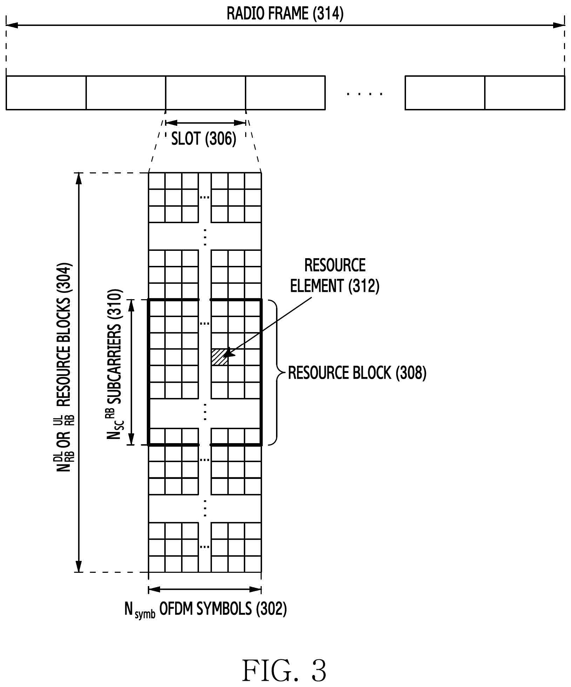

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and $N_{symb}$ OFDM symbols 302 are gathered to form one slot 306. A length of a subframe is defined as 1 ms, and a length of a radio frame 314 is defined as 10 ms. A minimum transmission unit in the frequency domain may be a subcarrier.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as $N_{symb}$ consecutive OFDM symbols in the time domain and $N_{SC}^{RB}$ consecutive subcarriers in the frequency domain. In an NR system, a resource block (RB) 308 may be defined as $N_{SC}^{RB}$ consecutive subcarriers 310 in the frequency domain. In a wireless access network, a bandwidth configuring a resource grid may include $N_{RB}^{DL}$ or $N_{RB}^{UL}$ RBs 304. The $N_{RB}^{DL}$ indicates the number of RBs corresponding to a downlink bandwidth, and the $N_{RB}^{UL}$ indicates the number of RBs corresponding to an uplink bandwidth. One RB 308 includes $N_{SC}^{RB}$ REs 312 on a frequency axis. In general, a minimum unit of transmission of data is RB and the number of subcarriers is $N_{SC}^{RB}$=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

[Table 1]

| Chan nel bandwidth [MHz] | SCS | 5 | 1 0 | 2 0 | 5 0 | 8 0 | 1 00 |
|---|---|---|---|---|---|---|---|
| Trans mission bandwidth configuratio n NRB | 15kH z | 2 5 | 5 2 | 1 06 | 2 07 | N /A | N /A |
| | 30kH z | 1 1 | 2 4 | 5 1 | 1 33 | 2 17 | 2 73 |
| | 60kH z | N /A | 1 1 | 2 4 | 6 5 | 1 07 | 1 35 |

[Table 2]

| Chan nel bandwidth [MHz] | SCS | 50 | 100 | 200 | 400 |
|---|---|---|---|---|---|
| Trans mission bandwidth configuratio | 60kH z | 66 | 132 | 264 | N/A |
| | 120k Hz | 32 | 66 | 132 | 264 |
| n NRB | | | | | |

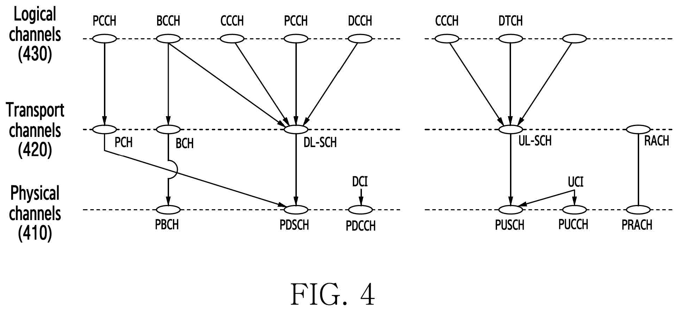

FIG. 4 illustrates an example of channels in a communication standard. The channels may include a physical channel 410, a transport channel 420, and a logical channel 430 according to layers defined in the communication standard.

Referring to FIG. 4, the physical channel 410 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may include symbols transmitted through the PDSCH, and a downlink control signal may refer to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may include symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 4.

The transport channel 420 may connect a physical layer and a medium access channel (MAC) layer located at a higher level of the physical layer, and may be classified according to how data is transmitted through a wireless interface. In the downlink, the transport channel 420 may include at least one of a paging channel (PCH) for paging, a broadcast channel (BCH) for broadcasting system information, and a downlink shared channel (DL-SCH) transmission of downlink data. In the uplink, the transport channel 420 may include at least one of a random access channel (RACH) for transmission of a random access preamble or an uplink shared channel (UL-SCH) for transmission of downlink data.

The logical channel 430 is located above the transport channel and is mapped to the transport channel 420. The

logical channel 430 may be classified into a control channel for transmitting control area information and a traffic channel for transmitting user area information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

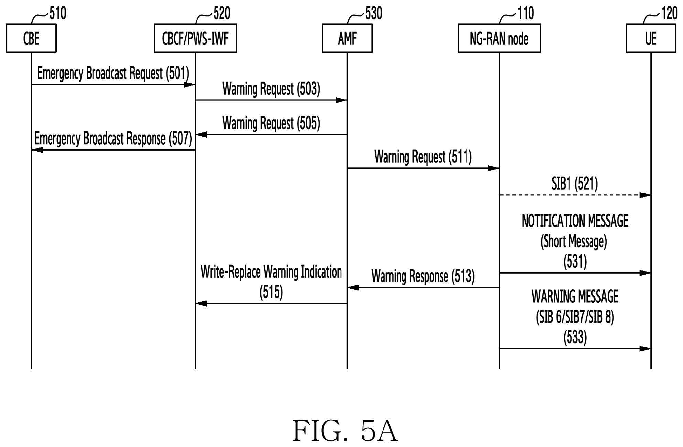

FIG. 5A illustrates an example of signaling for transmitting system information for a public warning system (PWS). 3GPP defines public warning systems (PWS).

NR connected to 5G Core (5GC) may support the PWS through a system information broadcast function. A base station 110 or a DU 220 may not only be responsible for scheduling and broadcast of a warning message, but also provide a role of paging a UE to provide an indication that the warning message is being broadcast. For example, the PWS may be classified as follows.

- Earthquake and Tsunami Warning System (ETWS): The ETWS is a public warning system developed to satisfy a regulatory requirement for a warning notification related to an earthquake and/or tsunami event. An ETWS warning notification may be a primary notification (a simple notification) (e.g., an SIB 6 of 3GPP NR) or a secondary notification (providing detailed information) (e.g., an SIB 7 of 3GPP NR).
- Commercial Mobile Alert System (CMAS): The CMAS is a public warning system developed for delivery of multiple concurrent warning notifications. A notification of the CMAS may be provided by predefined system information (e.g., an SIB 8 of 3GPP NR).

Different SIBs may be defined for an ETWS primary notification, an ETWS secondary notification, and a notification of CMAS. Paging is used to notify a UE of an ETWS indication and a CMAS indication. The UE may monitor the ETWS indication and/or the CMAS indication in its own paging occasion for RRC_IDLE and RRC_INACTIVE. The UE may monitor the ETWS indication and/or the CMAS indication in all paging occasions for RRC_CONNECTED. The paging may trigger acquisition of system information. Herein, the acquisition of the system information is not delayed until a next modification period.

Referring to FIG. 5A, in operation 501, a CBE 510 may transmit an emergency broadcast request message to a CBCF/PWS-IWF 520. In operation 503, the CBCF/PWS-IWF 520 may transmit a warning request message to an AMF 530. In operation 505, the AMF 530 may transmit a warning response message to the CBCF/PWS-IWF 520. In operation 507, the CBCF/PWS-IWF 520 may transmit an emergency broadcast response message to the CBE 510.

In operation 511, the AMF 530 may transmit a warning request message to a base station 110 (e.g., an NG-RAN node). For example, the AMF 530 may transmit the warning request message to the base station 110 through an N2 interface. The warning request message may be a 'WRITE-REPLACE WARNING REQUEST' message. The warning request message may be used to request start or overwrite of broadcast of a warning message. For example, the warning request message may have the following format.

[Table 3]

| IE/Group Name | P resence | R ange | IE type and reference | Sema ntics description | C riticality | A ssigned Criticalit y |
|---|---|---|---|---|---|---|
| Message Type | M | | 9.3. 1.1 | | Y ES | re ject |
| Message Identifier | M | | 9.3. 1.35 | | Y ES | re ject |
| Serial Number | M | | 9.3. 1.36 | | Y ES | re ject |
| Warning Area List | O | | 9.3. 1.37 | | Y ES | ig nore |
| Repetitio n Period | M | | 9.3. 1.49 | | Y ES | re ject |
| Number of Broad-casts Requested | M | | 9.3. 1.38 | | Y ES | re ject |
| Warning Type | O | | 9.3. 1.39 | | Y ES | ig nore |
| Warning Security Information | O | | OC TET STRING (SIZE(50)) | This IE is not used in the specifi-cation. If received, the IE is ig-nored. | Y ES | ig nore |
| Data Coding Scheme | O | | 9.3. 1.41 | | Y ES | ig nore |

(continued)

| IE/Group Name | P resence | R ange | IE type and reference | Sema ntics description | C riticality | A ssigned Criticalit y |
|---|---|---|---|---|---|---|
| Warning Message Contents | O | | 9.3. 1.42 | | Y ES | ig nore |
| Concurre nt Warning Message Indicator | O | | 9.3. 1.46 | | Y ES | re ject |
| Warning Area Co-ordinates | O | | 9.3. 1.112 | | Y ES | ig nore |

The 'Message Type' indicates a message type of the warning request message. The 'Message Identifier' indicates an identifier of the warning message. The 'Serial Number' indicates a message specified from a source and a type indicated through the 'Message Identifier'. The 'Warning Area List' indicates a list of areas in which broadcast (or cancellation) of the warning message is necessary. The 'Number of Broadcasts Requested' indicates the number of times the warning message is to be broadcast. The 'Warning Type' indicates a type of disaster. The 'Message Type' indicates a message type of the warning message. The 'Data Coding Scheme' indicates an alphabet or coding applied to characters of the warning message. The 'Data Coding Scheme' indicates an alphabet or coding applied to characters of the warning message. The 'Warning Message Contents' indicates user information (e.g., warning content of the warning message). The 'Concurrent Warning Message Indicator' indicates that the received warning message is a new message scheduled to be broadcast concurrently with another ongoing warning message broadcast. The 'Warning Area Coordinates' indicates warning area coordinates affected by the warning message.

In operation 513, the base station 110 may transmit a warning response message to the AMF 530.

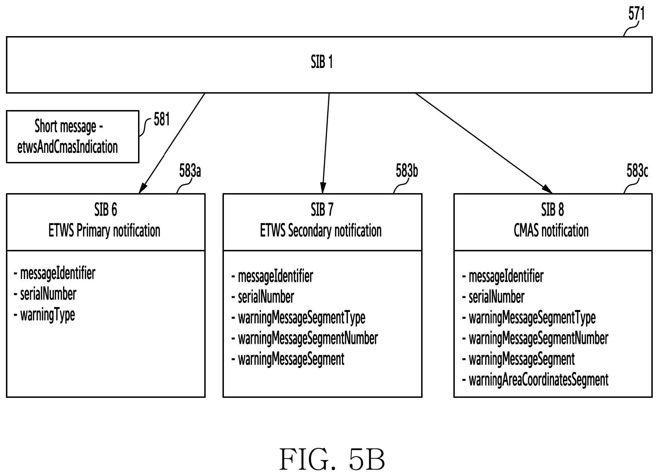

In operation 521, the base station 110 may broadcast a system information block (SIB) 1 message. The SIB 1 message may include scheduling information of one or more SI messages. Each SI message of the one or more SI messages may include at least one SIB different from the SIB 1. For example, the SIB 1 message may include scheduling information of the system information for the PWS. Since the base station 110 has received the warning request message from the AMF 530, the base station 110 may trigger broadcast of the warning message on a cell. Since the warning message includes system information (e.g., the SIB 6, the SIB 7, and the SIB 8), the base station 110 may broadcast the SIB 1 message to inform a terminal (e.g., a terminal 120) on a cell of scheduling. The SIB 1 message may be broadcast through a BCCH and a PDSCH. A specific format for the SIB 1 message is described in detail through FIG. 5B.

In operation 531, the base station 110 may transmit a notification message. The notification message may be used to indicate in advance that the system information of the PWS is provided. According to an embodiment, the notification message may be a short message. The short message may be transmitted on a PDCCH through a paging-radio network temporary identity (P-RNTI). A description of the short message is described in detail through FIG. 5B.

In operation 533, the base station 110 may broadcast the warning message. The warning message may include the system information for the PWS. For example, the warning message may be the SIB 6 for the primary notification of the ETWS. For example, the warning message may be the SIB 7 for the secondary notification of the ETWS. For example, the warning message may be the SIB 8 for the notification of the CMAS. The warning message including the system information for the PWS may be broadcast through the BCCH and the PDSCH. Specific information (e.g., an information element (IE)) included in the system information for the PWS is described in detail through FIG. 5B.

FIG. 5B illustrates examples of system information for a public warning system (PWS).

Referring to FIG. 5B, an SIB 1 message 571 may include scheduling information of one or more SI messages. For example, the scheduling information may have the following format.

【Table 4】

- *SI-SchedulingInfo*

The IE *SI-SchedulingInfo* contains information needed for acquisition of SI messages.

***SI-SchedulingInfo* information element**

```
-- ASN1START
-- TAG-SI-SCHEDULINGINFO-START
SI-SchedulingInfo ::=              SEQUENCE {
    schedulingInfoList                 SEQUENCE (SIZE (1..maxSI-Message)) OF SchedulingInfo,
    si-WindowLength                    ENUMERATED {s5, s10, s20, s40, s80, s160, s320, s640, s1280},
    si-RequestConfig                   SI-RequestConfig   OPTIONAL,  -- Cond MSG-1
    si-RequestConfigSUL                SI-RequestConfig   OPTIONAL,  -- Cond SUL-MSG-1
    systemInformationAreaID            BIT STRING (SIZE (24))   OPTIONAL,   -- Need R
```

```
        ...
    }
    SchedulingInfo ::=          SEQUENCE {
        si-BroadcastStatus              ENUMERATED {broadcasting,
notBroadcasting},
        si-Periodicity              ENUMERATED {rf8, rf16, rf32, rf64, rf128,
rf256, rf512},
        sib-MappingInfo             SIB-Mapping
    }
    SIB-Mapping ::=             SEQUENCE (SIZE (1..maxSIB)) OF SIB-
TypeInfo
    SIB-TypeInfo ::=            SEQUENCE {
        type                ENUMERATED {sibType2, sibType3, sibType4,
sibType5, sibType6, sibType7, sibType8, sibType9,
                                sibType10-v1610,    sibType11-v1610,
sibType12-v1610, sibType13-v1610, sibType14-v1610,
                                spare3, spare2, spare1,... },
        valueTag                                    INTEGER  (0..31)
OPTIONAL, -- Cond SIB-TYPE
        areaScope                               ENUMERATED  {true}
OPTIONAL -- Need S
    }
```

```
-- TAG-SI-SCHEDULINGINFO-STOP

-- ASN1STOP
```

The scheduling information may be configured for each SI message, and the scheduling information may include a periodicity for each SI message (e.g., an 'si-Periodicity' IE) and mapping information (e.g., an 'sib-MappingInfo' IE). The mapping information may include one or more SIBs. The mapping information may indicate a type of a corresponding SIB, and the type may be an SIB 6, an SIB 7, and/or an SIB 8.

A short message 581 may be provided through a field of downlink control information (DCI) of a PDCCH, and bits of the field (e.g., three bits) may indicate the following information. For example, the bits may indicate 2.

[Table 5]

| Bi t | Short Message |
|---|---|
| 1 | systemInfoModificationIf set to 1: indication of a BCCH modification other than SIB6, SIB7 and SIB8. |
| 2 | etwsAndCmasIndicationIf set to 1: indication of an ETWS primary notification and/or an ETWS secondary notification and/or a CMAS notification. |
| 3 | stopPagingMonitoringThis bit can be used for only operation with shared spectrum channel access and if nrofPDCCH-MonitoringOccasionPerSSB-InPO is present.If set to 1: indication that the UE may stop monitoring PDCCH occasion(s) for paging in this Paging Occasion as specified in TS 38.304 [20], clause 7.1. |
| 4 - 8 | Not used in this release of the specification, and shall be ignored by UE if received. |

An SIB 6 583a may include an ETWS primary notification. The SIB 6 583a may include a message identifier (e.g., a 'messageIdentifier' IE), a serial number (e.g., a 'serialNumber' IE), and a warning type (e.g., a 'warningType' IE). The IEs of Table 3 may be referred to for a description of each information. In the present disclosure, the same warning message indicates that a value of the message identifier and a value of the serial number are the same.

An SIB 7 583a may include an ETWS secondary notification. The SIB 7 583b may include a message identifier (e.g., a 'messageIdentifier' IE), a serial number (e.g., a 'serialNumber' IE), and a coding scheme (e.g., 'dataCodingScheme'). The IEs of Table 3 may be referred to for a description of each information. The SIB 7 583b may include a segment of the warning message (e.g., 'warningMessageSegment'), a segment type indicating whether the segment is a last segment (e.g., a 'warningMessageSegmentType' IE), and a number of the segment (hereinafter, a segment number) (e.g., a 'warningMessageSegmentNumber' IE). In a case that a size of a payload of the warning message exceeds a maximum payload size, the warning message may be divided into a plurality of segments and transmitted. A segment of the warning message may be transmitted through the one SIB 7 583b.

An SIB 8 583c may include a CMAS notification. The SIB 8 583c may include a message identifier (e.g., a 'messageIdentifier' IE), a serial number (e.g., a 'serialNumber' IE), and a coding scheme (e.g., 'dataCodingScheme'). The IEs of Table 3 may be referred to for a description of each information. The SIB 7 583b may include a segment of the warning message (e.g., 'warningMessageSegment'), a segment type indicating whether the segment is a last segment (e.g., a 'warningMessageSegmentType' IE), a number of the segment (hereinafter, a segment number) (e.g., a 'warningMessageSegmentNumber' IE), and a segment of a geographical area in which the segment is valid (e.g., a 'warningAreaCoordinatesSegment' IE). In a case that a size of a payload of a warning message exceeds a maximum payload size, the warning message may be divided into a plurality of segments and transmitted. A segment of the warning message may be transmitted through the one SIB 8 583c. For example, if a maximum payload size available for each modulation and coding scheme (MCS) of the warning message (e.g., the SIB 8 583c) is greater than a maximum payload size, the warning message may be divided into segments within the maximum payload size. According to a method in which the segments are transmitted, a reception delay of the warning message in the terminal 120 may vary.

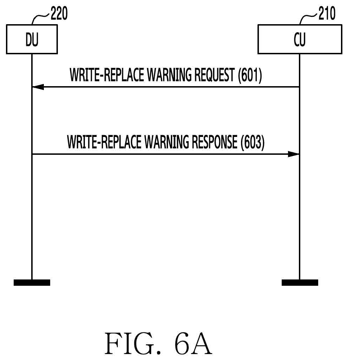

FIG. 6A illustrates an example of a warning request procedure in an F1 interface. The base station 110 of FIG. 5A may be replaced with a CU 210 and a DU 220. The CU 210 may receive a warning request message from an AMF 530. The DU 220 may transmit an SIB 1 message (e.g., an SIB message 571), a notification message (e.g., a short message 581), and/or a warning message (e.g., an SIB 6 583a, an SIB 7 583b, or an SIB 8 583c) to a terminal 120.

Referring to FIG. 6A, in operation 601, the CU 210 may transmit a warning request message (e.g., a 'WRITE-REPLACE WARNING REQUEST' message) to the DU 220. The CU 210 may initiate a procedure by transmitting the warning request message to the DU 220. The DU 220 receiving the warning request message may designate a priority of

resources to process the warning message.

In operation 603, the DU 220 may transmit a warning response message (e.g., a 'WRITE-REPLACE WARNING RESPONSE' message) to the CU 210. The DU 220 may provide an acknowledgement for the warning request message by transmitting the warning response message to the CU 210. As a non-limiting example, for a UE that may not receive system information in broadcast, the DU 220 may include, in the warning response message, information indicating that the UE needs delivery of dedicated system information.

The warning request message may have, for example, the following format.

[Table 6]

| IE/Gr oup Name | P resence | Range | I E type and referenc e | Se mantics descriptio n | C riticality | A ssigned Criticalit y |
|---|---|---|---|---|---|---|
| Mess age Type | M | | 9 .3.1.1 | | Y ES | re ject |
| Trans action ID | M | | 9 .3.1.23 | | Y ES | re ject |
| PWS Sys-tem Infor-mation | M | | 9 .3.1.58 | Thi s IE includes the system informatio n for public warn-ing, as defined in TS 38.331 [8]. | Y ES | re ject |
| Repet ition Period | M | | 9 .3.1.59 | | Y ES | re ject |
| Numb er of Broadcasts Requested | M | | 9 .3.1.60 | | Y ES | re ject |
| Cell To Be Broadcast List | | 0..1 | | | Y ES | re ject |
| >Cell to Be Broadcast | | 1.. <maxCel-lingNBD U> | | | E ACH | re ject |
| Item IEs | | | | | | |
| >>NR CGI | M | | 9 .3.1.12 | | - | |

The 'Message Type' indicates a message type of the warning request message of the operation 601. The 'Transaction ID' indicates an identifier for identifying a procedure of the warning request message. The 'PWS System Information' indicates system information for a PWS. A specific format of the system information is described through Table 6 described below. The 'Repetition Period' indicates a periodicity of a warning message to be broadcast. For example, the periodicity may be indicated as 1 second or more and $2^{17}$-1 seconds or less. The 'Number of Broadcasts Requested' indicates the number of times the warning message is to be broadcast. The 'Cell To Be Broadcast List' indicates information on a cell in which broadcast is necessary, and the cell may be indicated through a global identifier (e.g., a cell global identity (CGI)).

[Table 7]

| IE/Group Name | P resence | ange | R IE type and referenc e | Semanti cs description | C riticality | A ssigned Criticalit y |
|---|---|---|---|---|---|---|
| SIB type | M | | IN TE-GER (6..8, ...) | Indicates a certain SIB block for public warning message, e.g. 6 means sib-Type6, 7 for sibType7, etc. | - | |

(continued)

| IE/Group Name | P resence | ange | R IE type and referenc e | Semanti cs description | C riticality | A ssigned Criticalit y |
|---|---|---|---|---|---|---|
| SIB mes-sage | M | | O CTET STRING | SIB message for public warning, as de-fined in TS 38.331 [8]. | - | |
| Notificatio n Information | O | | | | Y ES | ig nore |
| >Message Identifier | M | | 9. 3.1.81 | | - | |
| >Serial Number | M | | 9. 3.1.82 | | - | |
| Additional SIB Mes-sage List | O | | 9. 3.1.86 | Addition al SIB messages containing dif-ferent segments of a public warning message if segmentation is applied, as defined in TS 38.331 [8]. | Y es | re ject |

The 'SIB type' indicates a type of an SIB, and indicates the SIB 6 583a, the SIB 7 583b, or the SIB 8 583c. The 'SIB message' indicates a warning message used for public warning. The 'Message Identifier' of the 'Notification Information' indicates an identifier of the warning message. The 'Serial Number' of the 'Notification Information' indicates a message specified from a source and a type indicated through the 'Message Identifier'. The 'Additional SIB Message List' IE indicates a remaining segment(s) other than a segment of the warning message indicated through the 'SIB message', in a case that the warning message is divided into a plurality of segments due to a size of a message. The remaining segment(s) may be referred to as an additional SIB message. The additional SIB message may be associated with the same message identifier and serial number as the segment of the warning message.

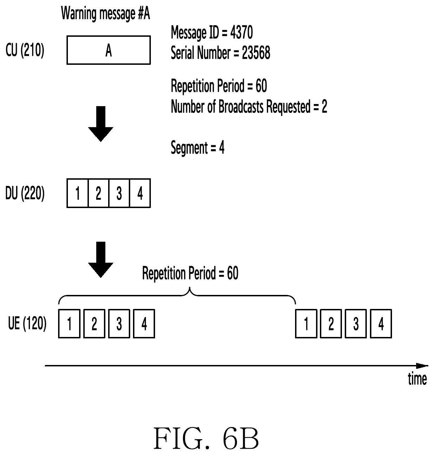

FIG. 6B illustrates an example of a warning message, segments, and setting parameters in an F1 interface. Based on the description described through FIG. 6A, a specific example of a warning message is described in FIG. 6B.

Referring to FIG. 6B, a CU 210 may transmit a warning request message to a DU 220. The warning request message may include a message identifier (e.g., message ID = 4370) and a serial number (e.g., Serial Number = 23568). The message identifier and the serial number may specify one warning message. In the present disclosure, a first warning message and a second warning message being the same warning message indicates that a message identifier of the first warning message is the same as a message identifier of the second warning message, and a serial number of the first warning message is the same as a serial number of the second warning message. The warning request message may be used to set, for the DU 220, a periodicity of the warning message (e.g., a 'repetition period' IE = 60) to be broadcast. For example, the DU 220 may repeatedly transmit the warning request message every 60 seconds. The number of broadcasts of the warning message (e.g., a 'Number of Broadcasts Requested' IE = 2) of the warning request message indicates the number of times the warning message is to be broadcast. For example, the DU 220 may broadcast the warning message two times.

Assume that the warning message is divided into four segments (e.g., a first segment, a second segment, a third segment, and a fourth segment). The DU 220 may transmit the four segments two times. The DU 220 may transmit a total of eight segments. The DU 220 may transmit the segments in an order of a first segment #1, a second segment #1, a third segment #1, and a fourth segment #1, and the first segment #2, the second segment #2, the third segment #2, and the fourth segment #2. An interval between the first segment #1 and the first segment #2 may be 60 seconds. A UE (e.g., a terminal 120) may receive the four segments two times. The UE may receive a total of eight segments. The UE may receive the segments in an order of the first segment #1, the second segment #1, the third segment #1, and the fourth segment #1, and the first segment #2, the second segment #2, the third segment #2, and the fourth segment #2.

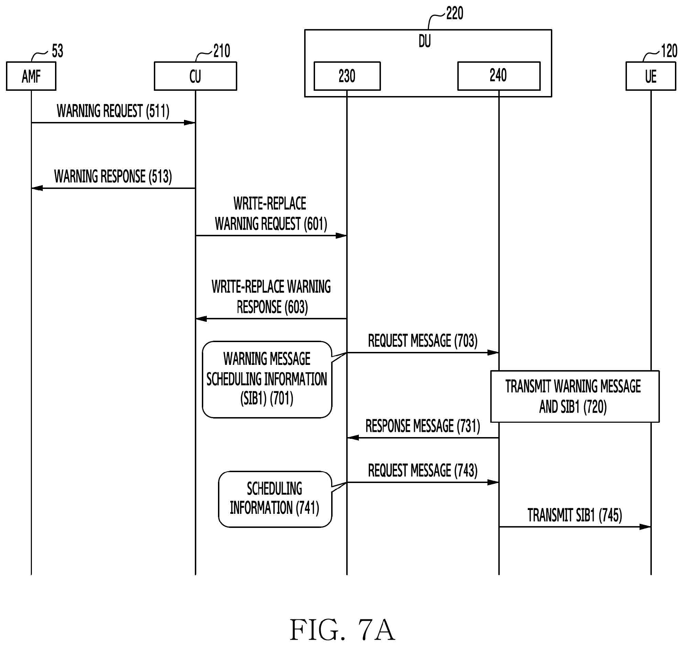

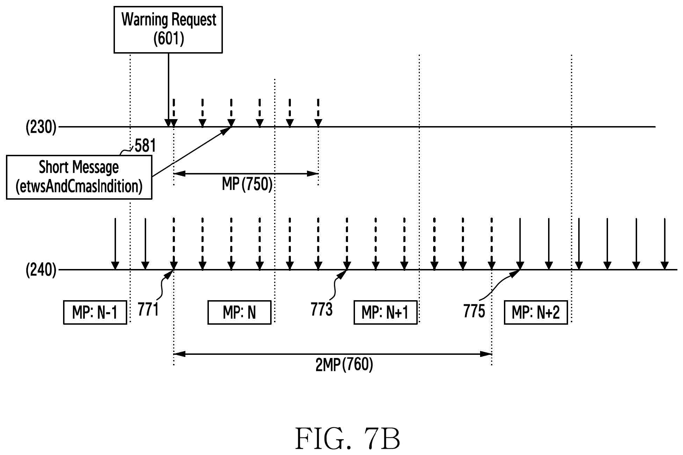

FIG. 7A and FIG. 7B illustrate examples of signaling for transmission of a single warning message. The same reference numerals may indicate the same descriptions. Each MP indicates a modification period.

Referring to FIG. 7A, in operation 511, an AMF 530 may transmit a warning request message to a base station 110 (e.g., an NG-RAN node). For example, the AMF 530 may transmit the warning request message to the base station 110 through an N2 interface. The warning request message may be a 'WRITE-REPLACE WARNING REQUEST' message. Table 3 may be referred to for the warning request message. In operation 513, the base station 110 may transmit a warning response message to the AMF 530. In operation 601, a CU 210 may transmit a warning message (e.g., a 'WRITE-REPLACE WARNING REQUEST' message) to a DU 220. Table 6 may be referred to for the warning request message. In

operation 603, the DU 220 may transmit a warning response message (e.g., a 'WRITE-REPLACE WARNING RESPONSE' message) to the CU 210.

In operation 701, the DU 220 (e.g., an RRC management unit 230) may generate scheduling information for a warning message. The RRC management unit 230 may provide the scheduling information to a MAC scheduler 240.

In operation 703, the DU 220 (e.g., the RRC management unit 230) may provide, to the MAC scheduler 240, a request message for the scheduling information. The request message may be transmitted inside the DU 220, and may include all segments of the warning message.

In operation 720, the DU 220 (e.g., the MAC scheduler 240) may transmit the warning message and an SIB 1 message. The DU 220 may broadcast the warning message and the SIB 1 message on a cell. The MAC scheduler 240 may schedule segments of the warning message. The MAC scheduler 240 may generate the SIB 1 message including scheduling information for the segments of the warning message. The MAC scheduler 240 may control the segments of the warning message and the SIB 1 message to be broadcast. The broadcast of the warning message and the SIB 1 message is specifically described through FIG. 7B.

In operation 731, the DU 220 (e.g., the MAC scheduler 240) may provide a response message to the RRC management unit 230.

In operation 741, the DU 220 (e.g., the MAC scheduler 240) may generate scheduling information. For example, since transmission for the warning message has been performed, the scheduling information may not include scheduling information for system information (e.g., an SIB 8) associated with the warning message.

In operation 743, the DU 220 (e.g., the MAC scheduler 240) may provide a request message. Since transmission for the warning message has been completed, the request message may not include information on any event.

In operation 745, the DU 220 (e.g., the MAC scheduler 240) may transmit the SIB 1 message.

Referring to FIG. 7B, the SIB 1 message may be periodically transmitted. For example, at a first point 771, the SIB 1 message may be transmitted due to system modification. The DU 220 may receive a warning request message (e.g., the warning request message of the operation 601). In response to the warning request message, the RRC management unit 230 of the DU 220 may reconfigure scheduling information of an SIB1. For example, the warning request message may indicate a CMAS notification. The RRC management unit 230 of the DU 220 may obtain a warning message (e.g., an SI message including an SIB 8) included in the warning request message. The RRC management unit 230 may modify the SIB 1 message to include scheduling information for the warning message. The RRC management unit 230 may provide the modified SIB 1 message and the warning message to the MAC scheduler 240. The RRC management unit 230 may repeatedly provide the modified SIB 1 message and the warning message during a modification period 750. The RRC management unit 230 may transmit a short message (e.g., a short message 581) for indicating the CMAS notification through the MAC scheduler 240. For example, the short message 581 may be transmitted in a paging method during the modification period 750.

The MAC scheduler 240 may broadcast the modified SIB 1 message and the warning message on a cell during a designated period 760 (e.g., a period corresponding to two times of the modification period 750, that is, 2MP). Unlike other system information, system information for a PWS may be obtained from a current modification period, not a next modification period. Therefore, warning messages may be repeatedly transmitted during a time interval corresponding to two modification periods. For example, the designated transmission period 760 may be two times of the modification period 750. At a second point 773, the MAC scheduler 240 may schedule the modified SIB 1 message and the warning message together. After warning messages are broadcast during the designated period 750, the MAC scheduler 240 may modify the SIB 1 message again. At a third point 775, the SIB 1 message may be transmitted due to system modification.

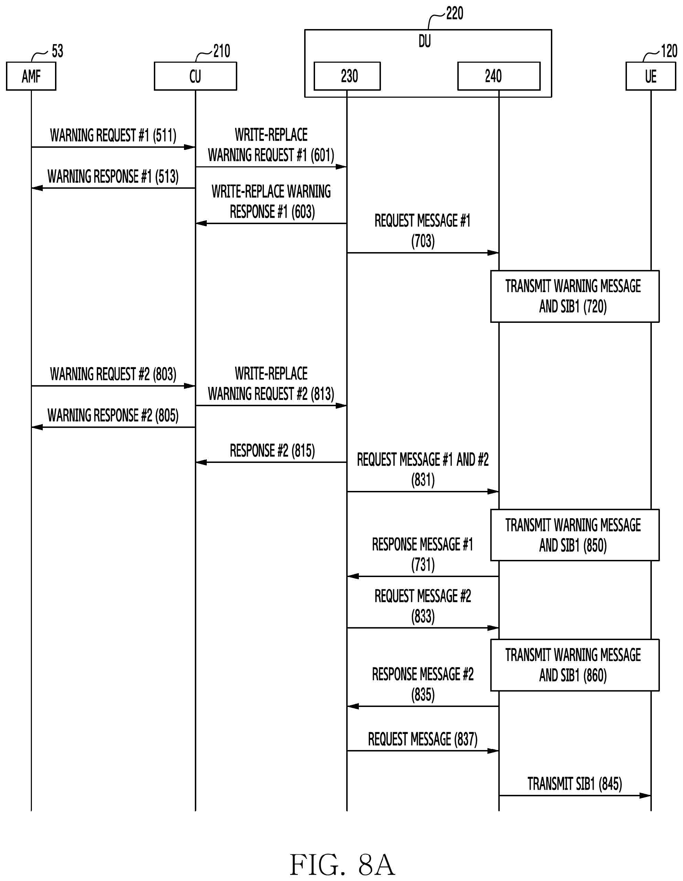

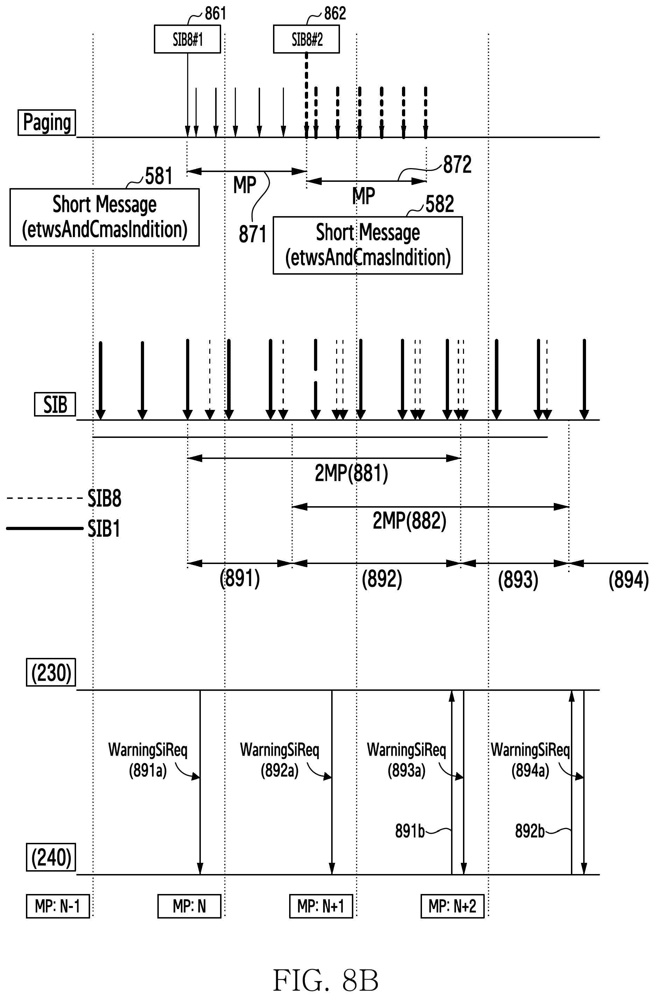

FIG. 8A and FIG. 8B illustrate examples of signaling for transmission of a plurality of warning messages. The same reference numerals may indicate the same descriptions. The plurality of warning messages may include a first warning message and a second warning message. Each MP indicates a modification period.

Referring to FIG. 8A, in operation 511, an AMF 530 may transmit a first warning request message (e.g., WARNING REQUEST #1) to a base station 110 (e.g., an NG-RAN node). For example, the AMF 530 may transmit the first warning request message to the base station 110 through an N2 interface. The first warning request message may be a 'WRITE-REPLACE WARNING REQUEST' message. Table 3 may be referred to for the first warning request message. In operation 513, the base station 110 may transmit a first warning response message (e.g., WARNING RESPONSE #1) to the AMF 530. In operation 601, a CU 210 may transmit a first warning message (e.g., a 'WRITE-REPLACE WARNING REQUEST #1' message) to a DU 220. Table 6 may be referred to for the first warning request message. In operation 603, the DU 220 may transmit a first warning response message (e.g., a 'WRITE-REPLACE WARNING RESPONSE #1' message) to the CU 210. The first warning request message may include the first warning message.

In operation 703, the DU 220 (e.g., an RRC management unit 230) may provide a request message #1 for the scheduling information to the MAC scheduler 240. The request message may be transmitted inside the DU 220, and may include all first segments of the first warning message.

In operation 720, the DU 220 (e.g., the MAC scheduler 240) may transmit the first warning message and an SIB 1 message. Broadcast of the first warning message and the SIB 1 message is specifically described through FIG. 8B.

In operation 803, the AMF 530 may transmit a second warning request message (e.g., WARNING REQUEST #2) to the base station 110 (e.g., the NG-RAN node). For example, the AMF 530 may transmit the second warning request message to the base station 110 through the N2 interface. The second warning request message may be a 'WRITE-REPLACE WARNING REQUEST' message. Table 3 may be referred to for the second warning request message. In operation 805, the base station 110 may transmit a second warning response message (e.g., WARNING RESPONSE #2) to the AMF 530. In operation 813, the CU 210 may transmit a second warning message (e.g., a 'WRITE-REPLACE WARNING REQUEST #2' message) to the DU 220. Table 6 may be referred to for the second warning request message. In operation 815, the DU 220 may transmit a second warning response message (e.g., a 'WRITE-REPLACE WARNING RESPONSE #2' message) to the CU 210. The second warning request message may include the second warning message.

In operation 831, the DU 220 (e.g., the RRC management unit 230) may provide request messages #1 and #2 for the scheduling information to the MAC scheduler 240. The request messages may be transmitted inside the DU 220, and may include all first segments of the first warning message and all second segments of the second warning message.

In operation 850, the DU 220 (e.g., the MAC scheduler 240) may transmit the first warning message, the second warning message, and the SIB 1 message. The SIB 1 message may include scheduling information on the second warning message as well as the first warning message. Broadcast of the first warning message, the second warning message, and the SIB 1 message is specifically described through FIG. 8B.

In operation 731, the DU 220 (e.g., the MAC scheduler 240) may provide a response message #1 to the RRC management unit 230. The response message may indicate that broadcast of the first warning message is completed.

In operation 833, the DU 220 (e.g., the RRC management unit 230) may provide a request message #2 for the scheduling information to the MAC scheduler 240. The request message may include second segments of the second warning message.

In operation 860, the DU 220 (e.g., the MAC scheduler 240) may transmit the second warning message and the SIB 1 message. The SIB 1 message may include the scheduling information on the second warning message. Meanwhile, since transmission for the first warning message has been completed, the SIB 1 message may not include the scheduling information on the first warning message. Broadcast of the second warning message and the SIB 1 message is specifically described through FIG. 8B.

In operation 835, the DU 220 (e.g., the MAC scheduler 240) may provide a response message #2 to the RRC management unit 230. The response message may indicate that broadcast of the second warning message is completed.

In operation 837, the DU 220 (e.g., the MAC scheduler 240) may provide a request message. Since transmission for the first warning message and the second warning message has been completed, the request message may not include information on any event.

In operation 845, the DU 220 (e.g., the MAC scheduler 240) may transmit the SIB 1 message.

Referring to FIG. 8B, an SIB 1 message may be periodically transmitted. The DU 220 (e.g., the RRC management unit 230) may receive a first warning request message. The first warning request message may include segments of a first warning message 861. For example, the warning request message may indicate a CMAS notification. The RRC management unit 230 may modify the SIB 1 message to include scheduling information for the warning message. The RRC management unit 230 may provide the modified SIB 1 message and the first warning message 861 (or first segments of the first warning message 861) to the MAC scheduler 240. The RRC management unit 230 may repeatedly provide the modified SIB 1 message and the first warning message 861 during a modification period 871. The RRC management unit 230 may provide a short message (e.g., a short message 581) for indicating the CMAS notification. The MAC scheduler 240 may be configured to broadcast the modified SIB 1 message and the first warning message 861 on a cell during a first transmission period 881. Unlike other system information, system information for a PWS may be obtained from a current modification period, not a next modification period. Therefore, warning messages associated with the first warning message 861 may be repeatedly transmitted during a time interval corresponding to two modification periods. For example, the first transmission period 881 may be two times of the modification period 871.

The DU 220 (e.g., the RRC management unit 230) may receive a second warning request message. The second warning request message may include segments of a second warning message 862. The RRC management unit 230 may repeatedly provide the modified SIB 1 message and the second warning message during a modification period 872. The RRC management unit 230 may provide a short message (e.g., a short message 582) for indicating a CMAS notification. The MAC scheduler 240 may be configured to broadcast the modified SIB 1 message and the second warning message 862 on a cell during a second transmission period 882. Similar to the first warning message 861, warning messages associated with the second warning message 862 may be repeatedly transmitted during a time interval corresponding to two modification periods. For example, the second transmission period 882 may be two times of the modification period 872.

Various system information may be broadcast according to a transmission period (e.g., the first transmission period 881 or the second transmission period 882) of the MAC scheduler 240. For example, during a first interval 891 of the first transmission period 881, an SIB 1 message including scheduling information on the first warning message 861 and the

first warning message 861 may be broadcast. The SIB 1 message may include related parameters (e.g., access-related information and cell selection-related information) of an SIB 1. The SIB 1 message may include scheduling information of other system information. For example, the SIB 1 message may include scheduling information of an SIB8 for the first warning message 861. An L3 layer management module (e.g., the RRC management unit 230) may transmit warning-related system information 891a (WarningSiReq) (e.g., the SIB1 message and the first warning message 861) to an L2 layer management module (e.g., the MAC scheduler 240).

For example, during a second interval 892 in a time interval in which the first transmission period 881 and the second transmission period 882 overlap, an SIB1 message including scheduling information on the first warning message 861 and the second warning message 862, the first warning message 861, and the second warning message 862 may be broadcast. The SIB 1 message may include related parameters (e.g., access-related information and cell selection-related information) of an SIB 1. The SIB 1 message may include scheduling information of other system information. For example, the SIB 1 message may include the scheduling information of the SIB8 for the first warning message 861 and scheduling information of an SIB8 for the second warning message 862. The L3 layer management module (e.g., the RRC management unit 230) may provide warning-related system information 892a (WarningSiReq) (e.g., the SIB1 message, the first warning message 861, and the second warning message 862) to the L2 layer management module (e.g., the MAC scheduler 240).

For example, during a third interval 893 of the second transmission period 882, an SIB1 message including scheduling information on the second warning message 862 and the second warning message 862 may be broadcast. The SIB 1 message may include related parameters (e.g., access-related information and cell selection-related information) of an SIB 1. The SIB 1 message may include scheduling information of other system information. For example, the SIB 1 message may include the scheduling information of the SIB8 for the second warning message 862. The L3 layer management module (e.g., the RRC management unit 230) may provide warning-related system information 893a (WarningSiReq) (e.g., the SIB1 message and the second warning message 862) to the L2 layer management module (e.g., the MAC scheduler 240). Meanwhile, an ACK 891b (WarningSiReq_ACK) for the first warning message 861 broadcast during the first transmission period 881 corresponding to approximately 2MP may be provided from the L2 layer management module (e.g., the MAC scheduler 240) to the L3 layer management module (e.g., the RRC management unit 230).

For example, during a fourth interval 894, the SIB1 message may be broadcast. The SIB 1 message may include related parameters (e.g., access-related information and cell selection-related information) of an SIB 1. At the corresponding time point, the SIB 1 message may not include scheduling information of other system information. For example, the SIB 1 message may include the scheduling information of the SIB8 for the second warning message 862. The L3 layer management module (e.g., the RRC management unit 230) may provide system information 894a (WarningSiReq) (e.g., the SIB1 message) to the L2 layer management module (e.g., the MAC scheduler 240). Meanwhile, an ACK 892b (WarningSiReq_ACK) for the second warning message 862 broadcast during the second transmission period 882 corresponding to approximately 2MP may be provided from the L2 layer management module (e.g., the MAC scheduler 240) to the L3 layer management module (e.g., the RRC management unit 230).

When receiving a warning request message, if there is no warning procedure in progress for a corresponding warning area, the base station 110 (or the DU 220) may be configured to broadcast a warning message of the received warning request message. If there is a warning message in progress in the warning area, the warning message in progress (hereinafter, a pending warning message) and the warning message of the received warning request message (hereinafter, a new warning message) may be compared. If a message identifier of the pending warning message is the same as a message identifier of the new warning message and a serial number of the pending warning message is the same as a serial number of the new warning message, the base station 110 (or the DU 220) may ignore the new warning message. Herein, the base station 110 (or the DU 220) may transmit a warning response message (e.g., the warning response message of operation 513) including broadcast completion information (e.g., a 'Broadcast Completed Area List' IE) of an AMF (e.g., the AMF 530). The warning response message may be associated with the new warning message. If the message identifier of the pending warning message is different from the message identifier of the new warning message or the serial number of the pending warning message is different from the serial number of the new warning message, the pending warning message may be recognized as being different from the new warning message. The base station 110 (or the DU 220) may identify a 'Concurrent Warning Message Indicator'. For example, if there is no 'Concurrent Warning Message Indicator', the base station 110 (or the CU 210) may ignore the warning request message. For another example, if there is the 'Concurrent Warning Message Indicator', the base station 110 may perform scheduling to broadcast the new warning message in the area. As an example, the CU 210 may request broadcast of the new warning message from the DU 220 through the warning procedure illustrated in FIG. 6A and FIG. 6B. The DU 220 may configure scheduling information for scheduling the pending warning message and the new warning message together. As the scheduling information is changed, the SIB 1 message may be modified. The DU 220 may broadcast the pending warning message and the new warning message together as well as the modified SIB 1 message.

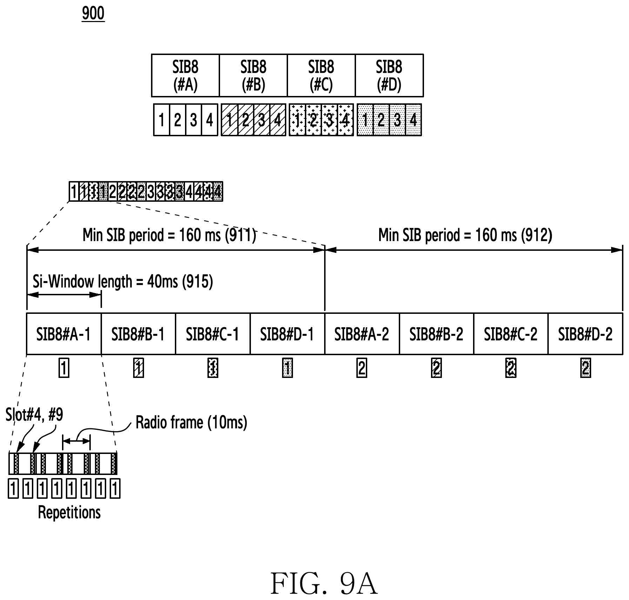

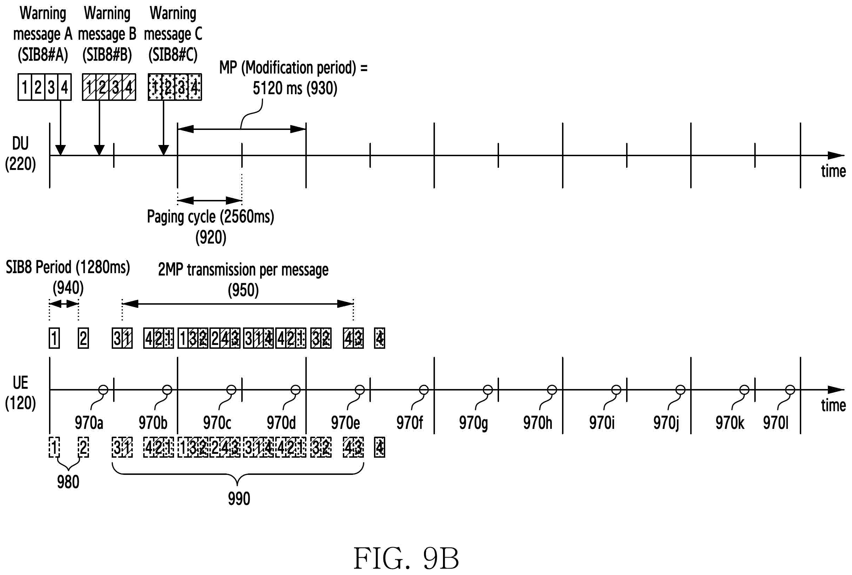

FIG. 9A and FIG. 9B illustrate examples of transmission of warning messages according to overlapping

scheduling. In a case that a warning message divided into a plurality of segments is received, a base station 110 (e.g., a DU 220) may transmit the segments according to the number of SI windows. The SI window indicates a time window in which SIBs may be transmitted, and the number of SI windows may correspond to a value obtained by dividing the smallest periodicity value among periodicities (e.g., the 'si-Periodicity' IE of Table 4) of SI messages by an SI window length (e.g., the 'si-WindowLength' IE of Table 4). For example, in an NR cell, assume that an SCS is 15 kHz. If the SI window length is 40 slots (e.g., the 'si-WindowLength' IE is set to 's40'), the SI window length is 40 ms. If the smallest periodicity value is 160 ms, the number of available SI windows is 4. Warning messages may be provided for concurrent broadcast.

Referring to FIG. 9A, mapping information 900 indicates a mapping relationship of warning messages of an SIB 8 in an SIB 1 message. For example, the warning messages may include a first warning message SIB 8 #A, a second warning message SIB 8 #B, a third warning message SIB 8 #C, and a fourth warning message SIB 8 #D. Each warning message may include four segments. A segment of a warning message may be understood as one SIB (or an SI message including the corresponding SIB). Therefore, the mapping information 900 may include scheduling information on a total of 16 SIBs.

A segment of a warning message may be repeatedly transmitted in one SI window. For example, the segment may be repeatedly transmitted over four radio frames (e.g., 10 ms). In each radio frame, the segment may be transmitted in each of a fourth slot and a ninth slot. For example, a first SIB periodicity 911 may include four available SI windows 915. As an example, the first SIB periodicity 911 may be 160 ms, and a length of each of the SI windows 915 may be approximately 40 ms. In each of the four available SI windows 915, a segment may be transmitted. In the first SIB periodicity 911, a 1st segment among first segments of the first warning message, a 1st segment among second segments of the second warning message, a 1st segment among third segments of the third warning message, and a 1st segment among fourth segments of the fourth warning message may be sequentially transmitted through the four available SI windows 915. In a second SIB periodicity 912, a second segment among the first segments of the first warning message, a second segment among the second segments of the second warning message, a second segment among the third segments of the third warning message, and a second segment among the fourth segments of the fourth warning message may be sequentially transmitted through the four available SI windows 915.

Referring to FIG. 9B, a situation in which the DU 220 transmits warning messages to a terminal 120 in the method of FIG. 9A is described. If segments are transmitted in the method of FIG. 9A, efficiency of resource use increases in terms of maximizing utilization of available SI windows, but a problem in which the terminal 120 may not normally receive a warning message may occur.

The DU 220 may obtain the first warning message SIB8 #A, the second warning message SIB8 #B, and the third warning message SIB8 #C. The DU 220 may first transmit the first warning message to the terminal 120. The first warning message may include four first segments. The DU 220 may transmit a segment among the first segments per SIB periodicity 940 (e.g., 1280 ms). The terminal 120 may be in an idle state (e.g., RRC IDLE). The terminal 120 may periodically monitor paging according to a paging cycle 920 (e.g., 2560 ms). The terminal 120 may check whether paging is received from the DU 220 (or the base station 110), and if paging is not received, may enter the idle state again. For example, according to the paging cycle 920, paging occasions (e.g., a paging occasion 970a, a paging occasion 970b, a paging occasion 970c, a paging occasion 970d, a paging occasion 970e, a paging occasion 970f, a paging occasion 970g, a paging occasion 970h, a paging occasion 970i, a paging occasion 970j, a paging occasion 970k, and a paging occasion 970l) in which the terminal 120 attempts paging may be configured for the terminal 120. If segments of a warning message are simply broadcast as much as a modification period 930, the terminal 120 that has not yet received a paging message may not receive the first segment and the second segment among the first segments of the first warning message before the paging occasion 970a. Due to unreceived segments 980 of the first warning message, it is difficult for the terminal 120 to obtain information on a disaster notification text corresponding to the complete first warning message. However, the terminal 120 may expect to receive 1st segment and 2nd segment among the first segments of the first warning message in a next periodicity.

The DU 220 may transmit the second warning message to the terminal 120. The second warning message may include four second segments. The DU 220 may transmit a segment among the second segments per SIB periodicity 940 (e.g., 1280 ms). The terminal 120 may be in an active state (e.g., RRC CONNECTED) due to the first warning message. The terminal 120 may receive the segments of the warning message for a transmission period 950 corresponding to two modification periods per warning message. If all segments are received in a warning message unit, the terminal 120 may display the corresponding warning message to a user through a display. For example, the terminal 120 receiving all first segments of the first warning message SIB8 #A may display a text message corresponding to the first warning message SIB8 #A to the user through the display. However, as illustrated in FIG. 9B, in a case that the first warning message SIB8 #A, the second warning message SIB8 #B, and the third warning message SIB8 #C are scheduled and transmitted together, the terminal 120 may not be able to perform reassembly in a warning message unit, even when receiving all segments 990 of each warning message. In a case that reassembly fails, the DU 220 may delete pending segments. In a specific case, the DU 220 may discard at least a portion of the first segments of the first warning message, at least a portion of the second segments of the second warning message, and at least a portion of the third segments of the third warning message. Due

to the failure of the reassembly and/or the discard, the terminal 120 may not be able to display a text message corresponding to a complete warning message to the user.

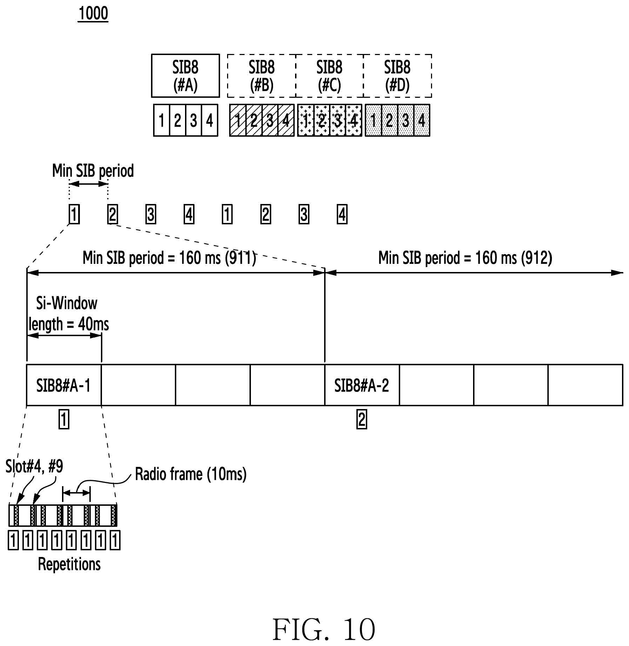

FIG. 10 illustrates an example of transmission of warning messages according to non-overlapping scheduling. In order to solve and mitigate the problem described through FIG. 9A to FIG. 9B, in embodiments of the present disclosure, a method for transmitting warning messages using non-overlapping scheduling is described. Herein, the non-overlapping scheduling indicates scheduling for preventing intervals in which different warning messages are scheduled from overlapping each other. Herein, two warning messages being different indicates that a message identifier and a serial number of a warning message are respectively different from a message identifier and a serial number of another warning message.

Referring to FIG. 10, mapping information 1000 indicates a mapping relationship of warning messages of an SIB 8 in an SIB 1 message. For example, the warning messages may include a first warning message SIB 8 #A, a second warning message SIB 8 #B, a third warning message SIB 8 #C, and a fourth warning message SIB 8 #D. Each warning message may include four segments. The mapping information 1000 may include scheduling information on segments of the first warning message SIB 8 #A. Therefore, the mapping information 1000 may include scheduling information on a total of four SIBs (e.g., SIB 8s). For example, a first SIB periodicity 911 may include four available SI windows. In each of the four available SI windows, a segment may be transmitted. In the first SIB periodicity 911, 1st segment among first segments of the first warning message may be transmitted through the four available SI windows. Since transmission of the first warning message is in progress, remaining three available SI windows are not used for transmission of other warning messages (e.g., the second warning message, the third warning message, and the fourth warning message). In a second SIB periodicity 912, 2nd segment among the first segments of the first warning message may be transmitted through the four available SI windows. According to the non-overlapping scheduling, remaining three available SI windows in the second SIB periodicity 912 may not be used.

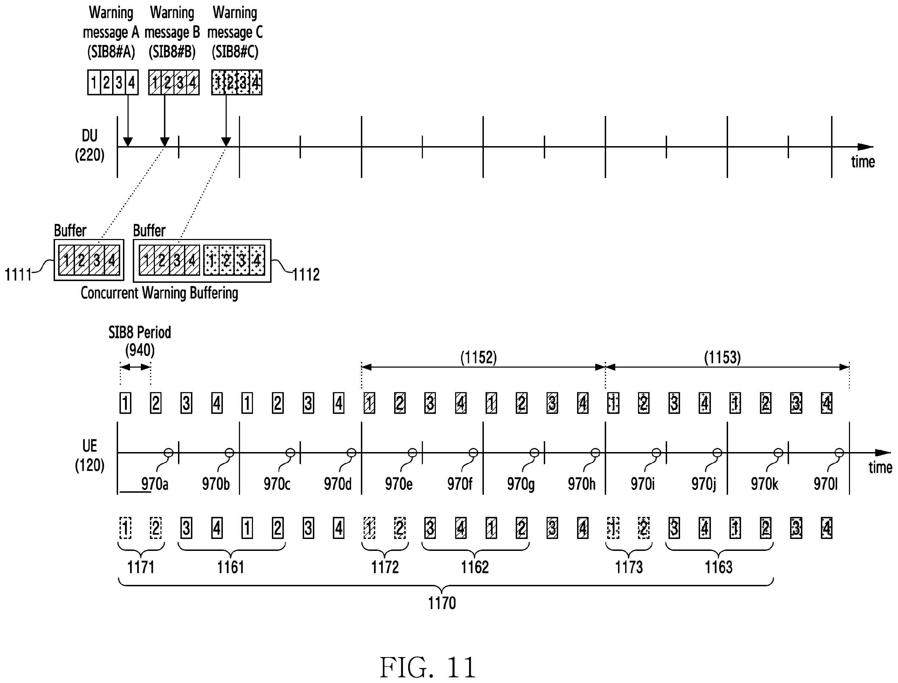

According to the non-overlapping scheduling, a terminal 120 may receive segments of different warning messages according to an order of warning messages. For example, the terminal 120 may receive second segments of the second warning message after receiving all first segments of the first warning message. Since segments of different warning messages are not mixed in the terminal 120, the terminal 120 may obtain a complete warning message through reassembly. Hereinafter, a method for more efficiently transmitting segments of warning messages using the non-overlapping scheduling is described through FIG. 11 to FIG. 13.

FIG. 11 illustrates an example of transmission of warning messages according to non-overlapping scheduling using a concurrent warning buffer.

Referring to FIG. 11, a DU 220 may obtain a first warning message SIB8 #A, a second warning message SIB8 #B, and a third warning message SIB8 #C. The DU 220 may first transmit the first warning message to a terminal 120. The first warning message may include four first segments. The DU 220 may transmit a segment among the first segments per SIB periodicity 940 (e.g., 1280 ms). The terminal 120 may be in an idle state (e.g., RRC IDLE). The terminal 120 may periodically monitor paging according to a paging cycle 920 (e.g., 2560 ms). The terminal 120 may check whether paging is received from the DU 220 (or a base station 110), and if paging is not received, may enter the idle state again. For example, according to the paging cycle 920, paging occasions (e.g., a paging occasion 970a, a paging occasion 970b, a paging occasion 970c, a paging occasion 970d, a paging occasion 970e, a paging occasion 970f, a paging occasion 970g, a paging occasion 970h, a paging occasion 970i, a paging occasion 970j, a paging occasion 970k, and a paging occasion 970l) in which the terminal 120 attempts paging may be configured for the terminal 120. If segments of a warning message are simply broadcast as much as a modification period 930, the terminal 120 that has not yet received a paging message may not receive 1st segment and 2nd segment among the first segments of the first warning message before the paging occasion 970a. According to an embodiment, the DU 220 may repeatedly transmit the first segments of the first warning message during a period longer than the paging cycle 920. For example, the DU 220 may repeatedly transmit the first segments of the first warning message as much as a transmission period corresponding to two modification periods. A modification period may be set as an integer multiple (e.g., two times or four times) of a default paging cycle (e.g., the paging cycle 920). Therefore, if each of the first segments of the first warning message is transmitted according to the SIB periodicity 940 during two modification periods, the terminal 120 may receive all of the first segments of the first warning message.

In response to receiving a request for broadcast of the second warning message, the DU 220 may determine whether at least one condition is satisfied. According to an embodiment, the DU 220 may determine whether there is a remaining space in the concurrent warning buffer. Only in a case that there is the remaining space in the concurrent warning buffer, the DU 220 may use the concurrent warning buffer. According to an embodiment, the DU 220 may determine whether all of available SI windows are in use in the SIB periodicity 940. For example, if all of the available SI windows are in use by at least a portion of other SIBs (e.g., an SIB 2, an SIB 3, an SIB 4, an SIB 5, an SIB 6, an SIB 7, and an SIB 8), the concurrent warning buffer may be used. If there is an SI window that is not in use among the available SI windows, the DU 220 may transmit a segment among second segments of the second warning message through the SI window. According to an embodiment, the DU 220 may determine whether there is a warning message currently being

transmitted. If there is a warning message (e.g., the first warning message) previously being periodically broadcast, the DU 220 may delay transmission of the second warning message for non-overlapping scheduling. Through satisfaction of at least one of the above-described conditions, the DU 220 may determine whether to store the second warning message in the concurrent warning buffer.

For example, the DU 220 may store the second warning message in a first buffer 1111. The first buffer 1111 may be used as the concurrent warning buffer. The DU 220 may identify that the first buffer 1111 is empty. The DU 220 may identify that at least a portion of the first segments of the first warning message has been transmitted, and at least another portion is scheduled to be transmitted. In other words, since a first transmission period of the first warning message is in progress, the DU 220 may store the obtained second warning message (e.g., obtained from a CU 210 or an AMF 530) in the first buffer 1111. Thereafter, if the first transmission period of the first warning message is completed, the DU 220 may transmit the second warning message. The DU 220 may transmit the second warning message during a second transmission period 1152. The DU 220 may repeatedly transmit the second segments of the second warning message during the second transmission period 1152. For example, the second transmission period 1152 may correspond to two times of the modification period. Even if the terminal 120 does not receive 1$^{st}$ segment and 2$^{nd}$ segment of the second warning message delivered before the paging occasion 970f, it may receive the first segment and the second segment of the second warning message in a next periodicity after the paging occasion 970f.

For example, the DU 220 may store the second warning message and the third storing message in a second buffer 1112. The DU 220 may identify that there is an available space in the second buffer 1112. The second buffer 1112 may be used as the concurrent warning buffer. The second buffer 1112 may be the same as or different from the first buffer 1111.

The DU 220 may identify that at least a portion of second segments (or first segments) of the second warning message (or the first warning message) has been transmitted, and at least another portion is scheduled to be transmitted. In other words, since the second transmission period of the second warning message is in progress, the DU 220 may store the obtained third warning message (e.g., obtained from the CU 210 or the AMF 530) in the second buffer 1112. Thereafter, if the second transmission interval 1152 of the second warning message is completed, the DU 220 may transmit the third warning message. The DU 220 may transmit the third warning message during a third transmission period 1153. The DU 220 may repeatedly transmit third segments of the third warning message during the third transmission period 1153. For example, the third transmission period 1153 may correspond to two times of the modification period. Even if the terminal 120 does not receive 1$^{st}$ segment and 2nd segment of the third warning message delivered before the paging occasion 970i, it may receive the first segment and the second segment of the third warning message in a next periodicity after the paging occasion 970i. The terminal 120 may not receive 1$^{st}$ segment and 2$^{nd}$ segment 1171 of the first segments. The terminal 120 may receive all of first segments 1161. The terminal 120 may not receive 1$^{st}$ segment and 2$^{nd}$ segment 1172 of the second segments. The terminal 120 may receive all of second segments 1162. The terminal 120 may not receive 1$^{st}$ segment and 2$^{nd}$ segment 1173 of the third segments. The terminal 120 may receive all of third segments 1163. The terminal 120 may receive all segments of warning messages provided from the DU 220 during a reception interval 1170.

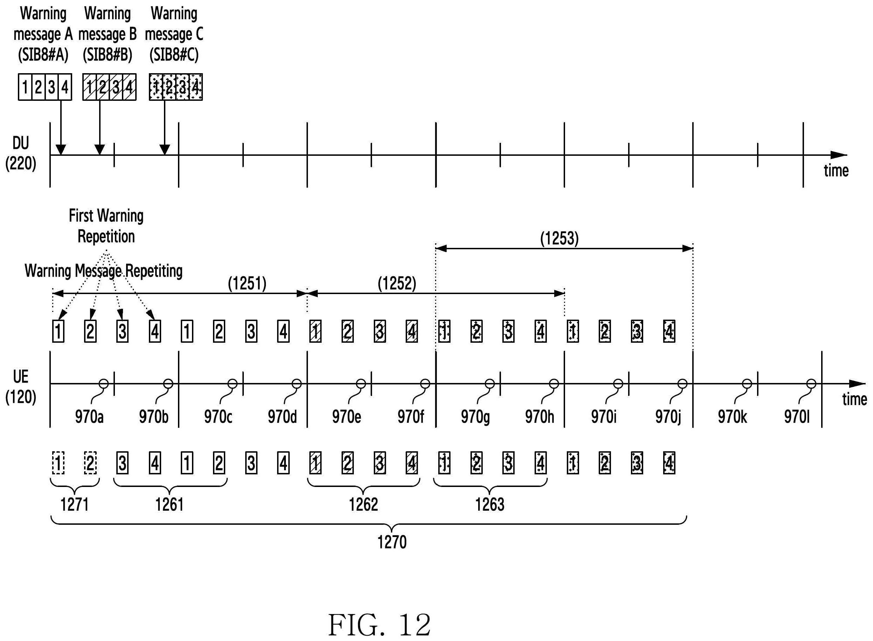

FIG. 12 illustrates an example of transmission of warning messages according to non-overlapping scheduling using repetition of a warning message.

Referring to FIG. 12, a DU 220 may obtain a first warning message SIB8 #A, a second warning message SIB8 #B, and a third warning message SIB8 #C. The DU 220 may first transmit the first warning message to a terminal 120. The first warning message may include four first segments. The DU 220 may transmit a segment among the first segments per SIB periodicity 940 (e.g., 1280 ms). The terminal 120 may be in an idle state (e.g., RRC IDLE). The terminal 120 may periodically monitor paging according to a paging cycle 920 (e.g., 2560 ms). The terminal 120 may check whether paging is received from the DU 220 (or a base station 110), and if paging is not received, may enter the idle state again. For example, according to the paging cycle 920, paging occasions (e.g., a paging occasion 970a, a paging occasion 970b, a paging occasion 970c, a paging occasion 970d, a paging occasion 970e, a paging occasion 970f, a paging occasion 970g, a paging occasion 970h, a paging occasion 970i, a paging occasion 970j, a paging occasion 970k, and a paging occasion 970l) in which the terminal 120 attempts paging may be configured for the terminal 120. The terminal 120 that has not yet received a paging message may not receive 1$^{st}$ segment and 2$^{nd}$ segment among the first segments of the first warning message before the paging occasion 970a.

Repeating warning messages during a period longer than a paging cycle of the terminal, for example, a transmission period corresponding to two modification periods, may cause more overhead than retransmitting segments of a missed warning message. In order to reduce such overhead, according to embodiments, the DU 220 may repeatedly transmit the first warning message. For example, the DU 220 may repeatedly transmit the first warning message one more time, and transmit other warning messages within a transmission period (e.g., a period corresponding to two modification periods). Warning messages may be repeatedly transmitted as much as a period corresponding to up to two modification periods for each warning message. Through repeated transmission of a warning message requested first (e.g., the first warning message), the DU 220 may provide again, to the terminal 120, segments missed due to late paging. In the present disclosure, when a warning request message of a warning message is received, in a case that there is no broadcast

warning message in progress for a warning area associated with the warning message, the warning message may be understood as a warning message occurring first. As a non-limiting example, the warning message may indicate a warning message requested first within a designated time. As a non-limiting example, 1st warning message may be a requested warning message in a case that there is no pending broadcast warning message in a corresponding cell. As warning messages are transmitted according to non-overlapping scheduling, in addition to repetition of the warning message requested first, a problem due to failure of reassembly may be mitigated. After transmission of repeated first warning messages (e.g., including an original first warning message and a repetition warning message corresponding to a copy of the first warning message) is completed, the DU 220 may transmit second segments of the second warning message, which is a next warning message.

For example, the DU 220 may transmit the first warning message during a first transmission period 1251. The DU 220 may transmit the first segments of the first warning message during the first transmission period 1251. Since the first warning message is a warning message requested first (or an initial warning message), the DU 220 may repeatedly transmit the first warning message. If one repetition is performed, the DU 220 may transmit the first segments of the first warning message and then transmit the first segments of the first warning message again. For example, the DU 220 may transmit the second warning message during a second transmission period 1252. The DU 220 may transmit the second segments of the second warning message during the second transmission period 1252. Meanwhile, in a case that transmission of the second warning message is completed by one transmission of the second segments, the DU 220 may immediately trigger transmission of the third warning message. The DU 220 may transmit the third warning message during a third transmission period 1253. The DU 220 may transmit third segments of the third warning message during the third transmission period 1253. The terminal 120 may not receive 1st segment and 2nd segment 1271 of the first segments. The terminal 120 may receive all of first segments 1261. The terminal 120 may receive all of second segments 1262. The terminal 120 may receive all of third segments 1263. The terminal 120 may receive all segments of warning messages provided from the DU 220 during a reception interval 1270.

In FIG. 12, an example of repeating a warning message requested first once is described, but such repetition is only an example and does not limit embodiments of the present disclosure. According to an embodiment, the DU 220 may repeatedly transmit a designated warning message by the designated number of times. The designated number of times may be the predetermined number of times. For example, the designated number of times may be 2. For another example, the designated number of times may be 4. The DU 220 may additionally transmit the warning messages as much as the designated number of times in addition to an existing warning message. Repeating an initial warning message is to prevent that there are no segments that the terminal 120 fails to receive due to a paging cycle. Therefore, the designated number of times may be determined such that at least one of segments of a minimum warning message may be received within the paging cycle. The designated number of times may be determined based on the paging cycle, an SIB periodicity, and the number of segments in the warning message. As an example, the designated number of times may be obtained by applying a ceiling function to a value obtained by dividing a product of the number of segments in the warning message and the SIB periodicity by the paging cycle.

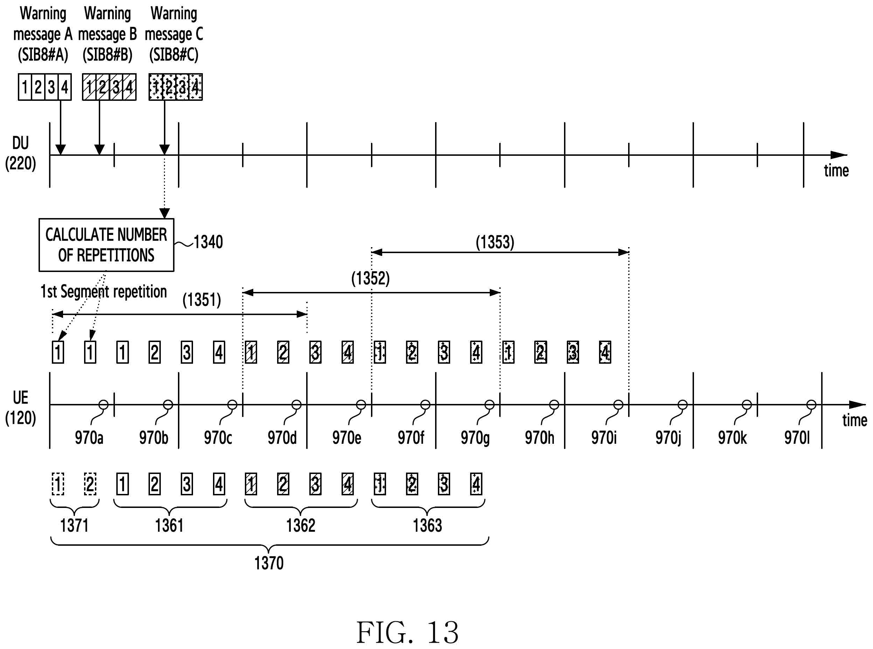

FIG. 13 illustrates an example of transmission of warning messages according to non-overlapping scheduling using repetition of a segment.

Referring to FIG. 13, a DU 220 may obtain a first warning message SIB8 #A, a second warning message SIB8 #B, and a third warning message SIB8 #C. The DU 220 may first transmit the first warning message to a terminal 120. The first warning message may include four first segments. The DU 220 may transmit a segment among the first segments per SIB periodicity 940 (e.g., 1280 ms). The terminal 120 may be in an idle state (e.g., RRC IDLE). The terminal 120 may periodically monitor paging according to a paging cycle 920 (e.g., 2560 ms). The terminal 120 may check whether paging is received from the DU 220 (or a base station 110), and if paging is not received, may enter the idle state again. For example, according to the paging cycle 920, paging occasions (e.g., a paging occasion 970a, a paging occasion 970b, a paging occasion 970c, a paging occasion 970d, a paging occasion 970e, a paging occasion 970f, a paging occasion 970g, a paging occasion 970h, a paging occasion 970i, a paging occasion 970j, a paging occasion 970k, and a paging occasion 970l) in which the terminal 120 attempts paging may be configured for the terminal 120. The terminal 120 that has not yet received a paging message may not receive 1st segment and 2nd segment among the first segments of the first warning message before the paging occasion 970a.

Repeating warning messages during a period longer than a paging cycle of the terminal, for example, a transmission period corresponding to two modification periods, may cause more overhead than retransmitting segments of a missed warning message. In order to reduce such overhead, according to embodiments, the DU 220 may repeatedly transmit at least one segment of the first warning message. For example, the DU 220 may further transmit a first transmitted segment of the first warning message by the number of repetitions. Thereafter, the DU 220 may transmit other warning messages within a transmission period (e.g., a period corresponding to two modification periods). Warning messages may be repeatedly transmitted as much as a period corresponding to up to two modification periods for each warning message. Through repeated transmission of at least one segment of a warning message requested first (e.g., the first warning message), the DU 220 may provide again, to the terminal 120, segments missed due to late paging. In the

present disclosure, when a warning request message of a warning message is received, in a case that there is no broadcast warning message in progress for a warning area associated with the warning message, the warning message may be understood as a warning message occurring first. As a non-limiting example, the warning message may indicate a warning message requested first within a designated time. As a non-limiting example, the warning message requested first may be a requested warning message in a case that there is no pending broadcast warning message in a corresponding cell.

According to an embodiment, the DU 220 may determine a reference segment of the warning message requested first (hereinafter, an initial warning message). The reference segment means a reference segment to be repeatedly transmitted. Hereinafter, one reference segment is exemplified, but embodiments of the present disclosure are not limited thereto. As a non-limiting example, a plurality of reference segments may be defined, and the plurality of reference segments may be repeatedly transmitted. For example, the DU 220 may determine, as the reference segment, a segment having the lowest segment number among segments of the warning message. For another example, the DU 220 may determine, as the reference segment, a segment having a segment type that is not the last segment among the segments of the warning message. For still another example, the DU 220 may determine, as the reference segment, a segment requested first among the segments of the warning message.

According to an embodiment, the DU 220 may determine the number of repetitions of the reference segment. Before transmitting an existing warning message, the DU 220 may additionally transmit the reference segments by the number of repetitions. Repeating reference segments of an initial warning message is to prevent that there are no segments that the terminal 120 fails to receive due to a paging cycle. Therefore, the number of repetitions may be determined such that a minimum segment may be received within the paging cycle. The number of repetitions may be determined based on the paging cycle and an SIB periodicity. As an example, the number of repetitions may be obtained by applying a ceiling function to a value obtained by dividing the paging cycle by the SIB periodicity. For example, in a case that the paging cycle is 2560 milliseconds (ms) and the SIB periodicity is 1280 ms, the number of repetitions of the reference segment may be 2. As only the reference segment is repeatedly transmitted rather than repeating all of the first warning message, which is the initial warning message, a reception period for obtaining all warning messages may be reduced.

For example, the DU 220 may transmit the first warning message during a first transmission period 1351. The DU 220 may transmit the first segments of the first warning message during the first transmission period 1351. Since the first warning message is a warning message requested first (i.e., the initial warning message), the DU 220 may repeatedly transmit a reference segment among the first segments of the first warning message. If one repetition is performed, the DU 220 may transmit the first segments of the first warning message after transmitting the reference segment. For example, the DU 220 may transmit the second warning message during a second transmission period 1352. The DU 220 may transmit second segments of the second warning message during the second transmission period 1352. Meanwhile, in a case that transmission of the second warning message is completed by one transmission of the second segments, the DU 220 may immediately trigger transmission of the third warning message. The DU 220 may transmit the third warning message during a third transmission period 1353. The DU 220 may transmit third segments of the third warning message during the third transmission period 1353. The terminal 120 may not receive 1$^{st}$ segment and 2$^{nd}$ segment 1371 of the first segments. The terminal 120 may receive all of first segments 1361. The terminal 120 may receive all of second segments 1362. The terminal 120 may receive all of third segments 1363. The terminal 120 may receive all segments of warning messages provided from the DU 220 during a reception interval 1370.

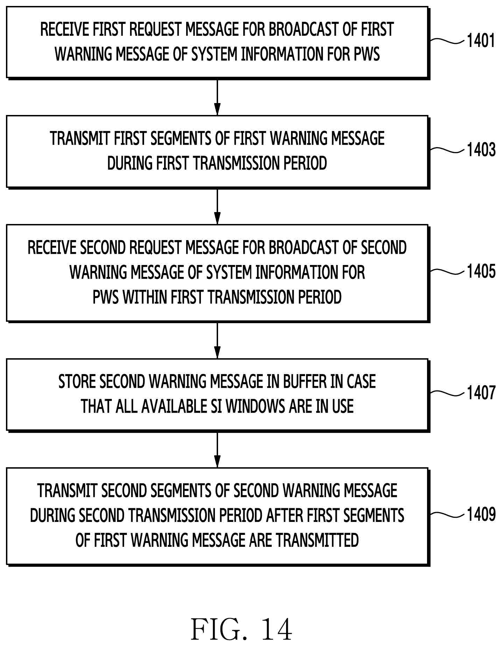

FIG. 14 illustrates an operation of an electronic device (e.g., a base station 110 or a DU 220) for non-overlapping scheduling using a concurrent warning buffer. For operations of FIG. 14, the timing diagram of FIG. 11 may be referred to.

Referring to FIG. 14, in operation 1401, the electronic device may receive a first request message for broadcast of a first warning message of system information for a PWS. The system information for the PWS may include an SIB 6 for an ETWS notification, an SIB 7 for an ETWS notification, and/or an SIB 8 for a CMAS notification. The first request message may be a warning request message for the first warning message. For example, in a case that the electronic device is the base station 110, the first request message may correspond to a warning request message (e.g., the warning request message of Table 3) received from an AMF. For example, in a case that the electronic device is the DU 220, the first request message may correspond to a warning request message (e.g., the warning request message of Table 6) received from a CU 210.

In operation 1403, the electronic device may transmit first segments of the first warning message during a first transmission period. For example, the first transmission period may correspond to two times of a modification period indicated in an SIB 1 message associated with the first warning message. The modification period may correspond to a product of a coefficient of the SIB 1 message and a default paging cycle.

In operation 1405, the electronic device may receive a second request message for broadcast of a second warning message of the system information for the PWS within the first transmission period. The system information for the PWS may include the SIB 6 for the ETWS notification, the SIB 7 for the ETWS notification, and/or the SIB 8 for the CMAS notification. The second request message may be a warning request message for the second warning message. For example, in a case that the electronic device is the base station 110, the second request message may correspond to a

warning request message (e.g., the warning request message of Table 3) received from the AMF. For example, in a case that the electronic device is the DU 220, the second request message may correspond to a warning request message (e.g., the warning request message of Table 6) received from the CU 210.

In operation 1407, in a case that all of available SI windows are in use, the electronic device may store the second warning message in a buffer. The buffer may be a concurrent warning buffer. The electronic device may store second segments of the second warning message in the buffer.

In operation 1409, after the first segments of the first warning message are transmitted, the electronic device may transmit the second segments of the second warning message during a second transmission period. The electronic device may identify the second segments of the second warning message stored in the buffer. The electronic device may transmit the second segments during the second transmission period. For example, the second transmission period may correspond to two times of a modification period indicated in an SIB 1 message associated with the second warning message. The modification period may correspond to a product of a coefficient of the SIB 1 message and the default paging cycle.

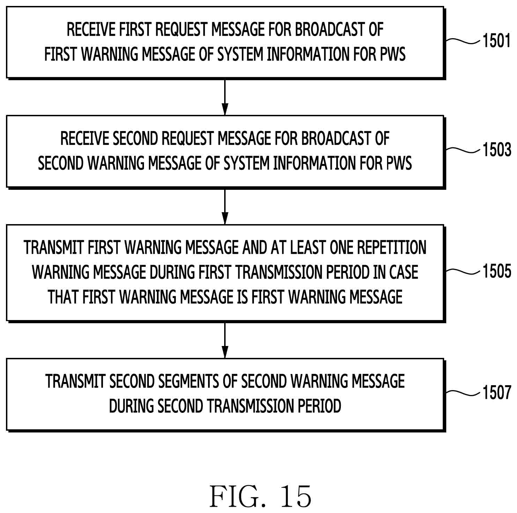

FIG. 15 illustrates an operation of an electronic device (e.g., a base station 110 or a DU 220) for non-overlapping scheduling using repetition of a warning message. For operations of FIG. 15, the timing diagram of FIG. 12 may be referred to.

Referring to FIG. 15, in operation 1501, the electronic device may receive a first request message for broadcast of a first warning message of system information for a PWS. The system information for the PWS may include an SIB 6 for an ETWS notification, an SIB 7 for an ETWS notification, and/or an SIB 8 for a CMAS notification. The first request message may be a warning request message for the first warning message.

In operation 1503, the electronic device may receive a second request message for broadcast of a second warning message of the system information for the PWS. The system information for the PWS may include the SIB 6 for the ETWS notification, the SIB 7 for the ETWS notification, and/or the SIB 8 for the CMAS notification. The second request message may be a warning request message for the second warning message.

In operation 1505, in a case that the first warning message is $1^{st}$ warning message, the electronic device may transmit the first warning message and at least one repetition warning message during a first transmission period. The $1^{st}$ warning message indicates an initial warning message. The initial warning message may be understood as a warning message occurring first when there is no broadcast warning procedure in progress in a corresponding warning area. For example, the initial warning message may indicate a warning message requested first within a designated time. For example, the initial warning message may be a requested warning message in a case that there is no pending broadcast warning message in a corresponding cell. The electronic device may identify the first warning message as the initial warning message. The electronic device may copy the first warning message. Respective segments of the at least one repetition warning message may be the same as first segments of the first warning message. The electronic device may generate at least one repetition warning message corresponding to the first warning message. According to an embodiment, the number of the at least one repetition warning message may be determined based on a paging cycle set through corresponding system information, an SIB periodicity indicated by an SIB 1 message, and the number of segments in the initial warning message. According to another embodiment, the number of the at least one repetition warning message may be fixed. For example, the number of the at least one repetition warning message may be 1.

In operation 1507, the electronic device may transmit second segments of the second warning message during a second transmission period. The second transmission period may be set to be less than two modification periods. After transmitting all of the first warning message and the at least one repetition warning message, the electronic device may transmit the second segments of the second warning message.

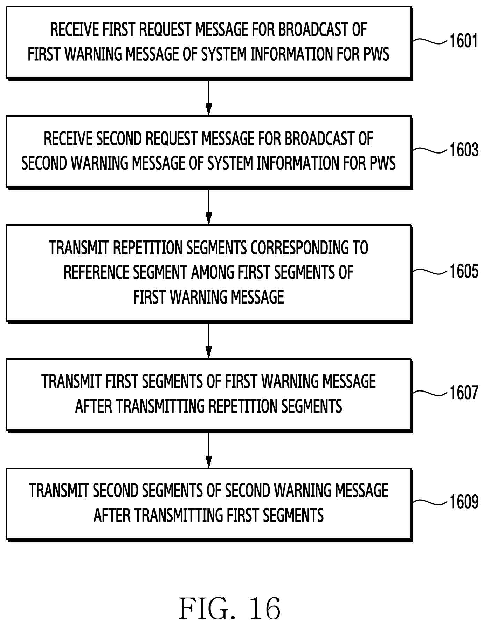

FIG. 16 illustrates an operation of an electronic device (e.g., a base station 110 or a DU 220) for non-overlapping scheduling using repetition of a segment. For operations of FIG. 16, the timing diagram of FIG. 13 may be referred to.

Referring to FIG. 16, in operation 1601, the electronic device may receive a first request message for broadcast of a first warning message of system information for a PWS. The system information for the PWS may include an SIB 6 for an ETWS notification, an SIB 7 for an ETWS notification, and/or an SIB 8 for a CMAS notification. The first request message may be a warning request message for the first warning message.

In operation 1603, the electronic device may receive a second request message for broadcast of a second warning message of the system information for the PWS. The system information for the PWS may include the SIB 6 for the ETWS notification, the SIB 7 for the ETWS notification, and/or the SIB 8 for the CMAS notification. The second request message may be a warning request message for the second warning message.

In operation 1605, the electronic device may transmit repetition segments corresponding to a reference segment among first segments of the first warning message. The electronic device may determine a reference segment of the warning message requested first (hereinafter, an initial warning message). For example, the electronic device may determine, as the reference segment, a segment having the lowest segment number among segments of the warning message. For another example, the electronic device may determine, as the reference segment, a segment having a segment type that is not the last segment among the segments of the warning message. For still another example, the

electronic device may determine, as the reference segment, a segment requested first among the segments of the warning message. The electronic device may determine the number of repetitions of the reference segment. Before transmitting an existing warning message, the electronic device may additionally transmit the reference segments by the number of repetitions. Repeating the reference segments of an initial warning message is to prevent that there are no segments that a terminal 120 fails to receive due to a paging cycle. Therefore, the number of repetitions may be determined such that a minimum segment may be received within the paging cycle. The number of repetitions may be determined based on the paging cycle and an SIB periodicity. Each of the repetition segments may include the same content as the reference segment.

In operation 1607, after transmitting the repetition segments, the electronic device may transmit the first segments of the first warning message.

In operation 1609, after transmitting the first segments, the electronic device may transmit second segments of the second warning message.

Various scheduling techniques using non-overlapping scheduling have been described through FIG. 11 to FIG. 16. Any one of the above-described techniques may be fixedly used by an operator, or at least two or more of the above-described techniques may be dynamically switched. According to an embodiment, an operator responsible for a scheduler of system information may manually set one of the above-described techniques. According to another embodiment, according to the setting of the operator, a scheduling device (e.g., the base station 110 or the DU 220) may adaptively set a scheduling technique among the above-described techniques. For example, the DU may select a scheduling technique to be applied from among the above-described techniques according to a key performance indicator (KPI) (e.g., a warning message transmission success rate, a delay, an MCS, or a throughput). The DU may perform scheduling according to the selected scheduling technique.

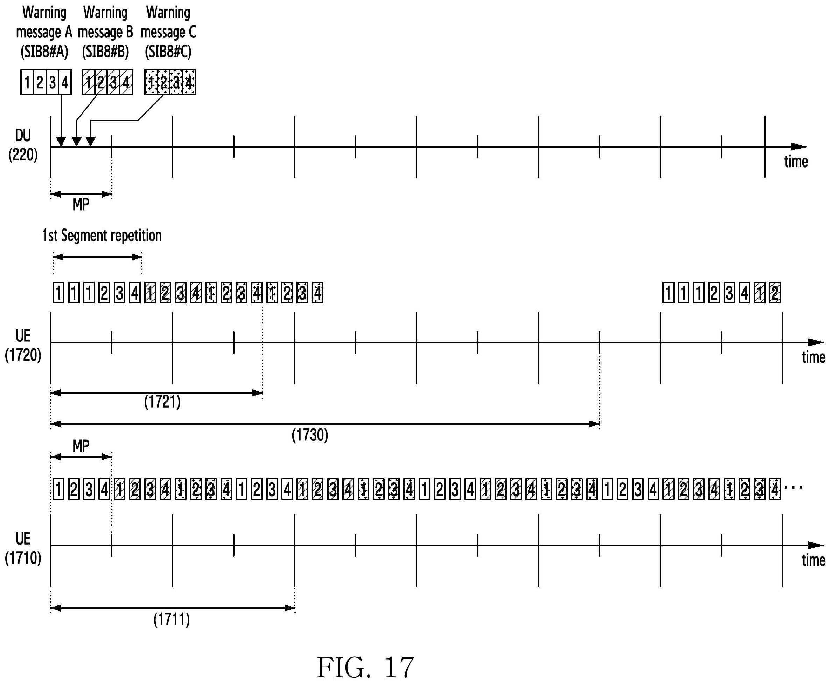

FIG. 17 illustrates examples of non-overlapping scheduling. In FIG. 17, an example of comparison between a technique 1710 for scheduling segments of warning messages in a round-robin method and a technique 1720 for repeatedly transmitting reference segments of an initial warning message (e.g., a first warning message) is described. Both the first technique 1710 and the second technique 1720 use a non-overlapping scheduling method.

Referring to FIG. 17, a DU 220 may obtain a first warning message SIB8 #A, a second warning message SIB8 #B, and a third warning message SIB8 #C. According to the first technique 1710, a terminal 120 may receive segments of the first warning message during a modification period, and may receive segments of the second warning message in a next modification period. In this way, if the warning message is simply changed and transmitted repeatedly for each fixed time interval, the terminal 120 may not receive some segments of the initial warning message due to late paging. The terminal 120 may receive missed segments in a subsequent time interval. The terminal 120 may receive segments of the first warning message SIB8 #A, the second warning message SIB8 #B, and the third warning message SIB8 #C during a first reception interval 1711.

According to the second technique 1720, the DU 220 may first transmit the first warning message to the terminal 120. The DU 220 may determine a reference segment of the warning message requested first (hereinafter, an initial warning message). The DU 220 may determine the number of repetitions of the reference segment. The DU 220 may transmit the first warning message during a first transmission period 1351. The DU 220 may transmit first segments of the first warning message during the first transmission period 1351. Since the first warning message is a warning message requested first (i.e., the initial warning message), the DU 220 may repeatedly transmit the reference segment among the first segments of the first warning message. For example, the DU 220 may repeat the reference segments two times. Thereafter, the DU 220 may transmit the first segments of the first warning message. After transmitting the first segments, the DU 220 may transmit second segments of the second warning message. After transmitting the second segments, the DU 220 may transmit third segments of the third warning message. Thereafter, the terminal may transmit the warning messages again according to a periodicity 1730 (e.g., a 'repetition period' IE = 40) of a warning message to be broadcast. The terminal 120 may receive segments of the first warning message SIB8 #A, the second warning message SIB8 #B, and the third warning message SIB8 #C during a second reception interval 1721. Through shortening of the second reception interval 1721 compared to the first reception interval 1711, a scheduling advantage of the second technique 1720 may be identified. In addition, the second technique 1720 may provide higher resource efficiency than the first technique 1710. For example, in the first technique 1710, transmission of unnecessary segments may be repeated due to the round-robin method. In contrast, in the second technique 1720, since only some segments are repeatedly scheduled at a requested time point, unnecessary use of scheduling on a radio channel may be reduced compared to the first technique 1710. In addition, when considering periodic transmission (e.g., a 'repetition period' IE) of each warning message as described in FIG. 6B, it may be identified that the second technique 1720 is a method more consistent with an intention of a standard than the first technique 1710.

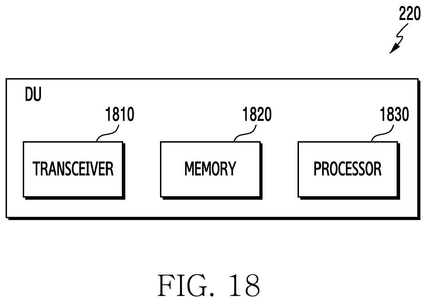

FIG. 18 illustrates an example of components of an electronic device for non-overlapping scheduling. A configuration exemplified in FIG. 18 may be understood as a configuration of a network entity (e.g., a DU 220) functioning as at least a portion of a base station (e.g., a base station 110). Terms such as '...unit', '...device', and the like used hereinafter mean a unit processing at least one function or operation, which may be implemented as hardware or software,

or a combination of hardware and software.

Referring to FIG. 18, an electronic device 1800 may include a transceiver 1810, memory 1820, and a processor 1830.

The transceiver 1810 may perform functions for transmitting and receiving a signal in a wired communication environment. The transceiver 1810 may include a wired interface for controlling a direct connection between a device and a device through a transmission medium (e.g., a copper wire or an optical fiber). For example, the transceiver 1810 may deliver an electrical signal to another device through a copper wire, or perform conversion between an electrical signal and an optical signal. The DU 220 may perform communication with a centralized unit (CU) (e.g., a CU 210) through the transceiver 1810. The transceiver 1810 may also perform functions for transmitting and receiving a signal in a wireless communication environment. For example, the transceiver 1810 may perform a conversion function between a baseband signal and a bitstream according to a physical layer standard of a system. For example, when transmitting data, the transceiver 1810 generates complex symbols by encoding and modulating a transmission bitstream. In addition, when receiving data, the transceiver 1810 restores a reception bitstream by demodulating and decoding a baseband signal. In addition, the transceiver 1810 may include a plurality of transmission and reception paths. According to an implementation example, the electronic device 1810, which is the DU 220, may perform communication with a UE (e.g., a terminal 120) directly through a radio access network, or may perform communication with the UE (e.g., the terminal 120) through a radio unit (RU).

The transceiver 1810 transmits and receives a signal as described above. Accordingly, all or a portion of the transceiver 1810 may be referred to as a 'communication unit', a 'transmission unit', a 'reception unit', or a 'transmission and reception unit'. In addition, in the following description, transmission and reception performed through a wireless channel are used as a meaning including that processing as described above is performed by the transceiver 1810. Although only the transceiver 1810 is illustrated in FIG. 18, according to another implementation example, the electronic device 1800 may include two or more transceivers.

Although not illustrated in FIG. 18, the transceiver 1810 may further include a backhaul transceiver for being connected to a core network or another base station. For example, the electronic device 1800 may operate as an RAN node including the CU 210. The backhaul transceiver may provide an interface for performing communication with other nodes (e.g., another RAN node, an eNB, and a gNB) in a network. That is, the backhaul transceiver converts a bitstream transmitted from a base station to another node, for example, another access node, another base station, an upper node, a core network, and the like, into a physical signal, and converts a physical signal received from another node into a bitstream.

The memory 1820 stores data such as a basic program, an application program, setting information, and the like for an operation of the electronic device 1800. The memory 1820 may be referred to as a storage unit. The memory 1820 may be configured as a volatile memory, a non-volatile memory, or a combination of a volatile memory and a non-volatile memory. In addition, the memory 1820 may provide stored data according to a request of the processor 1830. The memory 1820, which is a functional component, indicates a storage space. For example, the memory 1820 may be understood as not only indicating memory (e.g., a hard disk, a flash memory, or a RAM) disposed as a component in the electronic device 1800, but also indicating a space storing instructions and/or programs.

The processor 1830 controls overall operations of the electronic device 1800. The processor 1880 may be referred to as a control unit. For example, the processor 1830 transmits and receives a signal through the transceiver 1810 (or through a backhaul communication unit). In addition, the processor 1830 writes data to and reads data from the memory 1820. In addition, the processor 1830 may perform functions of a protocol stack required in a communication standard (e.g., the functions according to the protocol of FIG. 2A and the functions of FIG. 2B). Although only the processor 1830 is illustrated in FIG. 18, according to another implementation example, the electronic device 1800 may include two or more processors.

A configuration of the electronic device 1800 illustrated in FIG. 18 is only an example, and an example of components of an electronic device performing embodiments of the present disclosure is not limited from the configuration illustrated in FIG. 18. In some embodiments, some configurations may be added, deleted, or changed.

In embodiments, an electronic device (e.g., a distributed unit (DU)) is provided. The electronic device may comprise memory storing instructions, and at least one processor. The instructions may cause, when executed by the at least one processor, the electronic device to receive a first request message for broadcast of a first warning message of system information for a public warning system (PWS), transmit first segments of the first warning message on a cell during a first transmission period corresponding to two modification periods, in response to the first request message, based on receiving a second request message for broadcast of a second warning message of the system information in the first transmission period, determine whether all of available system information (SI) windows are in use or not, in a case that all of the available SI windows are in use, store the second warning message in a buffer, and after all of the first segments of the first warning message are transmitted, transmit second segments of the second warning message on the cell during a second transmission period corresponding to the two modification periods.

According to an embodiment, the instructions may cause, when executed by the at least one processor, the

electronic device to transmit, on the cell, a first system information block (SIB) 1 message including scheduling information of the first segments of the first warning message in response to the first request message, and transmit, on the cell, a second SIB 1 message including scheduling information of the first segments of the first warning message and scheduling information of the second segments of the second warning message in response to the second request message. The second warning message may be indicated for concurrent broadcast with broadcast of other ongoing warning messages.

According to an embodiment, the first request message may include a message identifier of the first warning message, a serial number of the first warning message, the first segments of the first warning message, the number of requested broadcasts, a repetition period, and a cell global identifier (CGI) for indicating the cell. The second request message may include a message identifier of the second warning message, a serial number of the second warning message, the second segments of the second warning message, the number of requested broadcasts, a repetition period, and the cell global identifier (CGI).

According to an embodiment, the system information for the PWS may include a system information block (SIB) 6 for earthquake and tsunami warning service (ETWS) primary notification, an SIB 7 for ETWS secondary notification, or an SIB 8 for a commercial mobile alert service (CMAS).

According to an embodiment, the instructions may cause, when executed by the at least one processor, the electronic device to, in a case that at least one SI window of the available SI windows is not in use, transmit at least one of the second segments of the second warning message on the cell during the at least one SI window.

According to an embodiment, the instructions may cause, when executed by the at least one processor, the electronic device to, in response to receiving a third request message for broadcast of a third warning message of the system information in the second transmission period, determine whether all of the available SI windows are in use or not, in a case that all of the available SI windows are in use, store the third warning message in the buffer, and after all of the second segments of the second warning message are transmitted, transmit third segments of the third warning message on the cell during a third transmission period corresponding to the two modification periods.

In embodiments, an electronic device (e.g., a distributed unit (DU)) is provided. The electronic device may comprise memory storing instructions, and at least one processor. The instructions may cause, when executed by the at least one processor, the electronic device to receive a first request message for broadcast of a first warning message of system information for a public warning system (PWS), receive a second request message for broadcast of a second warning message of the system information for the PWS, in a case that the first warning message corresponds to a warning message which is first in progress on a cell, transmit the first warning message and at least one repetition warning message corresponding to the first warning message on the cell during a first transmission period, and after all of the first warning message and the at least one repetition warning message are transmitted, transmit second segments of the second warning message on the cell during a second transmission period next to the first transmission period. Each message of the first warning message and the at least one repetition warning message corresponding to the first warning message may include first segments equally.

According to an embodiment, the instructions may cause, when executed by the at least one processor, the electronic device to identify whether a broadcast procedure of a warning message is in progress when receiving the first request message, and in a case that the broadcast procedure of the warning message is not in progress, determine the number of repetitions for the first warning message, and the number of repetitions may indicate the number of messages of the first warning message and the at least one repetition warning message.

According to an embodiment, the number of repetitions corresponding to the number of messages of the first warning message and the at least one repetition warning message may be determined based on the number of the first segments in the first warning message, a paging cycle, and a periodicity of a system information (SI) message for the first warning message.

According to an embodiment, the first transmission period may be less than or equal to two times of a modification period for the first warning message, and the second transmission period may be less than or equal to two times of a modification period for the second warning message.

According to an embodiment, the instructions may cause, when executed by the at least one processor, the electronic device to transmit, on the cell, a first system information block (SIB) 1 message including scheduling information of the first segments of the first warning message in response to the first request message, and transmit, on the cell, a second SIB 1 message including scheduling information of the first segments of the first warning message and scheduling information of the second segments of the second warning message in response to the second request message. The second warning message may be indicated for concurrent broadcast with broadcast of other ongoing warning messages.

According to an embodiment, the system information for the PWS may include a system information block (SIB) 6 for earthquake and tsunami warning service (ETWS) primary notification, an SIB 7 for ETWS secondary notification, or an SIB 8 for a commercial mobile alert service (CMAS).

According to an embodiment, the first request message may include a message identifier of the first warning message, a serial number of the first warning message, the first segments of the first warning message, the number of requested broadcasts, a repetition period, and a cell global identifier (CGI) for indicating the cell. The second request

message may include a message identifier of the second warning message, a serial number of the second warning message, the second segments of the second warning message, the number of requested broadcasts, a repetition period, and the cell global identifier (CGI).

In embodiments, an electronic device (e.g., a distributed unit (DU)) is provided. The electronic device may include memory storing instructions, and at least one processor. The instructions may cause, when executed by the at least one processor, the electronic device to receive a first request message for broadcast of a first warning message of system information for a public warning system (PWS), receive a second request message for broadcast of a second warning message of the system information for the PWS, in a case that the first warning message corresponds to a warning message which is first in progress on a cell, transmit repetition segments corresponding to a reference segment of first segments of the first warning message on the cell, after the repetition segments are transmitted, transmit the first segments of the first warning message on the cell, and after all of the repetition segments and the first segments of the first warning message are transmitted, transmit second segments of the second warning message on the cell.

According to an embodiment, the instructions may cause, when executed by the at least one processor, the electronic device to identify whether a broadcast procedure of a warning message is in progress when receiving the first request message, and in a case that the broadcast procedure of the warning message is not in progress, determine the number of the repetition segments.

According to an embodiment, the number of the repetition segments may be determined based on a paging cycle and a periodicity of a system information (SI) message for the first warning message.

According to an embodiment, the reference segment may be earliest in a segment number among the first segments of the first warning message. For example, the reference segment may correspond to the earliest segment number among segment numbers of the first segments of the first warning message.

According to an embodiment, the reference segment may be scheduled to be transmitted first among the first segments of the first warning message.

According to an embodiment, the system information for the PWS may include a system information block (SIB) 6 for earthquake and tsunami warning service (ETWS) primary notification, an SIB 7 for ETWS secondary notification, or an SIB 8 for a commercial mobile alert service (CMAS).

According to an embodiment, the first request message may include a message identifier of the first warning message, a serial number of the first warning message, the first segments of the first warning message, the number of requested broadcasts, a repetition period, and a cell global identifier (CGI) for indicating the cell. The second request message may include a message identifier of the second warning message, a serial number of the second warning message, the second segments of the second warning message, the number of requested broadcasts, a repetition period, and the cell global identifier (CGI).

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic,"

"logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium (e.g., memory 1820) that is readable by a machine (e.g., the DU 220, or an electronic device operating as the DU 220). For example, a processor (e.g., the processor 1830) of the machine (e.g., the DU 220, or an electronic device operating as the DU 220) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

**1.** An electronic device comprising:

memory storing instructions; and
at least one processor,
wherein the instructions cause, when executed by the at least one processor, the electronic device to:

receive a first request message for broadcast of a first warning message of system information for a public warning system (PWS),
transmit first segments of the first warning message on a cell during a first transmission period corresponding to two modification periods, in response to the first request message,
based on receiving a second request message for broadcast of a second warning message of the system information in the first transmission period, determine whether all of available system information (SI) windows are in use or not;
in a case that all of the available SI windows are in use, store the second warning message in a buffer, and
after all of the first segments of the first warning message are transmitted, transmit second segments of the second warning message on the cell during a second transmission period corresponding to the two modification periods.

**2.** The electronic device of claim 1,
wherein the instructions cause, when executed by the at least one processor, the electronic device to:

transmit, on the cell, a first system information block (SIB) 1 message including scheduling information of the first segments of the first warning message in response to the first request message, and
transmit, on the cell, a second SIB 1 message including scheduling information of the first segments of the first warning message and scheduling information of the second segments of the second warning message in response to the second request message, and
wherein the second warning message is indicated for concurrent broadcast with broadcast of other ongoing warning messages.

**3.** The electronic device of claim 2,

wherein the first request message includes a message identifier of the first warning message, a serial number of the first warning message, the first segments of the first warning message, a number of requested broadcasts, a repetition period, and a cell global identifier (CGI) for indicating the cell, and
wherein the second request message includes a message identifier of the second warning message, a serial number of the second warning message, the second segments of the second warning message, a number of requested broadcasts, a repetition period, and the cell global identifier (CGI) for indicating the cell.

**4.** The electronic device of claim 1, wherein the system information for the PWS includes a system information block (SIB) 6 for earthquake and tsunami warning service (ETWS) primary notification, an SIB 7 for ETWS secondary notification, or an SIB 8 for a commercial mobile alert service (CMAS).

**5.** The electronic device of claim 1, wherein the instructions cause, when executed by the at least one processor, the electronic device to, in a case that at least one SI window of the available SI windows is not in use, transmit at least one of the second segments of the second warning message on the cell during the at least one SI window.

**6.** The electronic device of claim 1, wherein the instructions cause, when executed by the at least one processor, the electronic device to:

in response to receiving a third request message for broadcast of a third warning message of the system information in the second transmission period, determine whether all of the available SI windows are in use or not,
in a case that all of the available SI windows are in use, store the third request message in the buffer, and
after all of the second segments of the second warning message are transmitted, transmit third segments of the third warning message on the cell during a third transmission period corresponding to the two modification periods.

**7.** An electronic device comprising:

memory storing instructions; and
at least one processor,

wherein the instructions cause, when executed by the at least one processor, the electronic device to:

receive a first request message for broadcast of a first warning message of system information for a public warning system (PWS),
receive a second request message for broadcast of a second warning message of the system information for the PWS,
in a case that the first warning message corresponds to a warning message which is first in progress on a cell, transmit the first warning message and at least one repetition warning message corresponding to the first warning message on the cell during a first transmission period, and
after all of the first warning message and the at least one repetition warning message are transmitted, transmit second segments of the second warning message on the cell during a second transmission period next to the first transmission period, and
wherein each message of the first warning message and the at least one repetition warning message corresponding to the first warning message includes first segments equally.

**8.** The electronic device of claim 7,
wherein the instructions cause, when executed by the at least one processor, the electronic device to:

identify whether a broadcast procedure of a warning message is in progress when receiving the first request message; and
in a case that the broadcast procedure of the warning message is not in progress, determine a number of repetitions for the first warning message, and
wherein the number of repetitions indicates the number of messages of the first warning message and the at least one repetition warning message.

**9.** The electronic device of claim 7,
wherein the number of repetitions corresponding to a number of messages of the first warning message and the at least one repeated warning message is determined based on a number of the first segments in the first warning message, a paging cycle, and a periodicity of a system information (SI) message for the first warning message.

**10.** The electronic device of claim 7,

wherein the first transmission period is less than or equal to two times of a modification period for the first warning message, and
wherein the second transmission period is less than or equal to two times of a modification period for the second warning message.

**11.** The electronic device of claim 7,
wherein the instructions cause, when executed by the at least one processor, the electronic device to:

transmit, on the cell, a system information block (SIB) 1 message including scheduling information of the first segments of the first warning message in response to the first request message, and
transmit, on the cell, a second SIB 1 message including scheduling information of the first segments of the first warning message and scheduling information of the second segments of the second warning message in response to the second request message, and
wherein the second warning message is indicated for concurrent broadcast with broadcast of other ongoing warning messages.

**12.** The electronic device of claim 7,
wherein the system information for the PWS includes a system information block (SIB) 6 for earthquake and tsunami warning service (ETWS) primary notification, an SIB 7 for ETWS secondary notification, or an SIB 8 for a commercial mobile alert service (CMAS).

**13.** The electronic device of claim 7,

wherein the first request message includes a message identifier of the first warning message, a serial number of the first warning message, the first segments of the first warning message, a number of requested broadcasts, a repetition period, and a cell global identifier (CGI) for indicating the cell, and

wherein the second request message includes a message identifier of the second warning message, a serial number of the second warning message, the second segments of the second warning message, a number of requested broadcasts, a repetition period, and the cell global identifier (CGI) for indicating the cell.

**14.** An electronic device comprising:

memory storing instructions; and
at least one processor,
wherein the instructions cause, when executed by the at least one processor, the electronic device to:

receive a first request message for broadcast of a first warning message of system information for a public warning system (PWS),
receive a second request message for broadcast of a second warning message of the system information for the PWS,
in a case that the first warning message corresponds to a warning message which is first in progress on a cell, transmit repetition segments corresponding to a reference segment of first segments of the first warning message on the cell,
after the repetition segments are transmitted, transmit the first segments of the first warning message on the cell, and
after all of the repetition segments and the first segments of the first warning message are transmitted, transmit second segments of the second warning message on the cell.

**15.** A method performed by an electronic device, the electronic device being the electronic device of any one of claims 1 to 14,
wherein the method comprises operations performed by the electronic device of any one of claims 1 to 14.

110
120

FIG. 1

210
CU
RRC
211
PDCP
212
220
DU
RLC
221
MAC
222
PHY
223

FIG. 2A

220
DU
RRC MANAGEMENT UNIT
230
MAC SCHEDULER
240

FIG. 2B

RADIO FRAME (314)
SLOT (306)
RESOURCE ELEMENT (312)
RESOURCE BLOCK (308)
$N_{RB}^{DL}$ OR $N_{RB}^{UL}$ RESOURCE BLOCKS (304)
$N_{SC}^{RB}$ SUBCARRIERS (310)
$N_{symb}$ OFDM SYMBOLS (302)

FIG. 3

Logical channels (430)
Transport channels (420)
Physical channels (410)
PCCH
BCCH
CCCH
PCCH
DCCH
CCCH
DTCH
PCH
BCH
DL-SCH
UL-SCH
RACH
DCI
UCI
PBCH
PDSCH
PDCCH
PUSCH
PUCCH
PRACH

FIG. 4

510
520
530
110
120
CBE
CBCF/PWS-IWF
AMF
NG-RAN node
UE
Emergency Broadcast Request (501)
Warning Request (503)
Warning Request (505)
Emergency Broadcast Response (507)
Warning Request (511)
SIB1 (521)
NOTIFICATION MESSAGE
(Short Message)
(531)
Write-Replace Warning Indication
(515)
Warning Response (513)
WARNING MESSAGE
(SIB 6/SIB7/SIB 8)
(533)

FIG. 5A

571
SIB 1
Short message - etwsAndCmasIndication
581
583a
583b
583c
SIB 6
ETWS Primary notification
- messageIdentifier
- serialNumber
- warningType
SIB 7
ETWS Secondary notification
- messageIdentifier
- serialNumber
- warningMessageSegmentType
- warningMessageSegmentNumber
- warningMessageSegment
SIB 8
CMAS notification
- messageIdentifier
- serialNumber
- warningMessageSegmentType
- warningMessageSegmentNumber
- warningMessageSegment
- warningAreaCoordinatesSegment

FIG. 5B

220
DU
210
CU
WRITE-REPLACE WARNING REQUEST (601)
WRITE-REPLACE WARNING RESPONSE (603)

FIG. 6A

Warning message #A
CU (210)
A
Message ID = 4370
Serial Number = 23568
Repetition Period = 60
Number of Broadcasts Requested = 2
Segment = 4
DU (220)
1
2
3
4
Repetition Period = 60
UE (120)
1
2
3
4
1
2
3
4
time

FIG. 6B

220
DU
53
AMF
210
CU
230
240
120
UE
WARNING REQUEST (511)
WARNING RESPONSE (513)
WRITE-REPLACE WARNING REQUEST (601)
WRITE-REPLACE WARNING RESPONSE (603)
REQUEST MESSAGE (703)
WARNING MESSAGE SCHEDULING INFORMATION (SIB1) (701)
TRANSMIT WARNING MESSAGE AND SIB1 (720)
RESPONSE MESSAGE (731)
REQUEST MESSAGE (743)
SCHEDULING INFORMATION (741)
TRANSMIT SIB1 (745)

FIG. 7A

Warning Request
(601)
(230)
581
Short Message
(etwsAndCmasIndition)
MP(750)
(240)
771
773
775
MP: N-1
MP: N
MP: N+1
MP: N+2
2MP(760)

FIG. 7B

220
DU
53
AMF
210
CU
230
240
120
UE
WARNING REQUEST #1 (511)
WRITE-REPLACE
WARNING REQUEST #1 (601)
WARNING RESPONSE #1 (513)
WRITE-REPLACE WARNING
RESPONSE #1 (603)
REQUEST MESSAGE #1
(703)
TRANSMIT WARNING MESSAGE
AND SIB1 (720)
WARNING REQUEST #2 (803)
WRITE-REPLACE
WARNING REQUEST #2 (813)
WARNING RESPONSE #2 (805)
RESPONSE #2 (815)
REQUEST MESSAGE #1 AND #2
(831)
TRANSMIT WARNING MESSAGE
AND SIB1 (850)
RESPONSE MESSAGE #1
(731)
REQUEST MESSAGE #2
(833)
TRANSMIT WARNING MESSAGE
AND SIB1 (860)
RESPONSE MESSAGE #2
(835)
REQUEST MESSAGE (837)
TRANSMIT SIB1 (845)


FIG. 8A

861
SIB8#1
862
SIB8#2
Paging
581
Short Message
(etwsAndCmasIndition)
MP
871
MP
872
582
Short Message
(etwsAndCmasIndition)
SIB
2MP(881)
SIB8
SIB1
2MP(882)
(891)
(892)
(893)
(894)
(230)
WarningSiReq
(891a)
WarningSiReq
(892a)
WarningSiReq
(893a)
WarningSiReq
(894a)
891b
892b
(240)
MP: N-1
MP: N
MP: N+1
MP: N+2

FIG. 8B

900
SIB8 (#A)
SIB8 (#B)
SIB8 (#C)
SIB8 (#D)
1 2 3 4
Min SIB period = 160 ms (911)
Min SIB period = 160 ms (912)
Si-Window length = 40ms (915)
SIB8#A-1
SIB8#B-1
SIB8#C-1
SIB8#D-1
SIB8#A-2
SIB8#B-2
SIB8#C-2
SIB8#D-2
Slot#4, #9
Radio frame (10ms)
Repetitions

FIG. 9A

Warning message A (SIB8#A)
Warning message B (SIB8#B)
Warning message C (SIB8#C)
MP (Modification period) = 5120 ms (930)
DU (220)
Paging cycle (2560ms) (920)
time
SIB8 Period (1280ms) (940)
2MP transmission per message (950)
UE (120)
970a
970b
970c
970d
970e
970f
970g
970h
970i
970j
970k
970l
980
990
time


FIG. 9B

1000
SIB8 (#A)
SIB8 (#B)
SIB8 (#C)
SIB8 (#D)
1 2 3 4
1 2 3 4
1 2 3 4
1 2 3 4
Min SIB period
1 2 3 4 1 2 3 4
Min SIB period = 160 ms (911)
Min SIB period = 160 ms (912)
Si-Window length = 40ms
SIB8#A-1
SIB8#A-2
1
2
Slot#4, #9
Radio frame (10ms)
1 1 1 1 1 1 1 1
Repetitions

FIG. 10

Warning message A (SIB8#A)
Warning message B (SIB8#B)
Warning message C (SIB8#C)
DU (220)
time
Buffer
Buffer
1111
1112
Concurrent Warning Buffering
SIB8 Period (940)
(1152)
(1153)
UE (120)
970a
970b
970c
970d
970e
970f
970g
970h
970i
970j
970k
970l
time
1171
1161
1172
1162
1173
1163
1170

FIG. 11

Warning message A (SIB8#A)
Warning message B (SIB8#B)
Warning message C (SIB8#C)
DU (220)
UE (120)
time
First Warning Repetition
Warning Message Repetiting
(1251)
(1252)
(1253)
970a
970b
970c
970d
970e
970f
970g
970h
970i
970j
970k
970l
1261
1262
1263
1270
1271

FIG. 12

Warning message A (SIB8#A)
Warning message B (SIB8#B)
Warning message C (SIB8#C)
DU (220)
time
CALCULATE NUMBER OF REPETITIONS
1340
1st Segment repetition
(1351)
(1352)
(1353)
UE (120)
time
970a
970b
970c
970d
970e
970f
970g
970h
970i
970j
970k
970l
1371
1361
1362
1363
1370

FIG. 13

RECEIVE FIRST REQUEST MESSAGE FOR BROADCAST OF FIRST WARNING MESSAGE OF SYSTEM INFORMATION FOR PWS
1401
TRANSMIT FIRST SEGMENTS OF FIRST WARNING MESSAGE DURING FIRST TRANSMISSION PERIOD
1403
RECEIVE SECOND REQUEST MESSAGE FOR BROADCAST OF SECOND WARNING MESSAGE OF SYSTEM INFORMATION FOR PWS WITHIN FIRST TRANSMISSION PERIOD
1405
STORE SECOND WARNING MESSAGE IN BUFFER IN CASE THAT ALL AVAILABLE SI WINDOWS ARE IN USE
1407
TRANSMIT SECOND SEGMENTS OF SECOND WARNING MESSAGE DURING SECOND TRANSMISSION PERIOD AFTER FIRST SEGMENTS OF FIRST WARNING MESSAGE ARE TRANSMITTED
1409

FIG. 14

RECEIVE FIRST REQUEST MESSAGE FOR BROADCAST OF FIRST WARNING MESSAGE OF SYSTEM INFORMATION FOR PWS
1501
RECEIVE SECOND REQUEST MESSAGE FOR BROADCAST OF SECOND WARNING MESSAGE OF SYSTEM INFORMATION FOR PWS
1503
TRANSMIT FIRST WARNING MESSAGE AND AT LEAST ONE REPETITION WARNING MESSAGE DURING FIRST TRANSMISSION PERIOD IN CASE THAT FIRST WARNING MESSAGE IS FIRST WARNING MESSAGE
1505
TRANSMIT SECOND SEGMENTS OF SECOND WARNING MESSAGE DURING SECOND TRANSMISSION PERIOD
1507

FIG. 15

RECEIVE FIRST REQUEST MESSAGE FOR BROADCAST OF FIRST WARNING MESSAGE OF SYSTEM INFORMATION FOR PWS
1601
RECEIVE SECOND REQUEST MESSAGE FOR BROADCAST OF SECOND WARNING MESSAGE OF SYSTEM INFORMATION FOR PWS
1603
TRANSMIT REPETITION SEGMENTS CORRESPONDING TO REFERENCE SEGMENT AMONG FIRST SEGMENTS OF FIRST WARNING MESSAGE
1605
TRANSMIT FIRST SEGMENTS OF FIRST WARNING MESSAGE AFTER TRANSMITTING REPETITION SEGMENTS
1607
TRANSMIT SECOND SEGMENTS OF SECOND WARNING MESSAGE AFTER TRANSMITTING FIRST SEGMENTS
1609

FIG. 16

Warning message A (SIB8#A)
Warning message B (SIB8#B)
Warning message C (SIB8#C)
DU (220)
time
MP
1st Segment repetition
UE (1720)
time
(1721)
(1730)
MP
UE (1710)
time
(1711)

FIG. 17

220
DU
1810
1820
1830
TRANSCEIVER
MEMORY
PROCESSOR

FIG. 18

# INTERNATIONAL SEARCH REPORT

International application No. **PCT/KR2024/017218**

**A. CLASSIFICATION OF SUBJECT MATTER**

**H04W 4/90**(2018.01)i; **H04W 48/10**(2009.01)i; **H04W 68/02**(2009.01)i; **H04J 11/00**(2006.01)i; **H04W 88/08**(2009.01)i; **H04W 76/50**(2018.01)i

According to International Patent Classification (IPC) or to both national classification and IPC

**B. FIELDS SEARCHED**

Minimum documentation searched (classification system followed by classification symbols)

H04W 4/90(2018.01); H04W 68/00(2009.01); H04W 72/04(2009.01); H04W 72/12(2009.01); H04W 76/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공공 경고 시스템(public warning system, PWS), 방송(broadcast), 수정 기간(modification period), 시스템 정보(system information, SI), 세그먼트(segment), 윈도우(window), 버퍼(buffer)

**C. DOCUMENTS CONSIDERED TO BE RELEVANT**

| Category* | Citation of document, with indication, where appropriate, of the relevant passages | Relevant to claim No. |
|---|---|---|
| A | KR 10-2338796 B1 (ZTE CORPORATION) 13 December 2021 (2021-12-13)<br>See paragraphs [0039]-[0053]; and figure 2. | 1-15 |
| A | US 2021-0112580 A1 (FG INNOVATION COMPANY LIMITED) 15 April 2021 (2021-04-15)<br>See paragraphs [0034]-[0120]; and figures 1-11. | 1-15 |
| A | QUALCOMM INCORPORATED. Discussion on SSB for SDT in RedCap-specific initial BWP. R2-2300190, 3GPP TSG-RAN WG2 Meeting #121. Athens, Greece. 17 February 2023.<br>See pages 14-15. | 1-15 |
| A | HUAWEI et al. Correction on SI update for posSIB-r17. R2-2304790, 3GPP TSG-RAN2 Meeting #122. Incheon, Korea. 11 May 2023.<br>See pages 1-3. | 1-15 |
| A | US 2023-0007624 A1 (INTERDIGITAL PATENT HOLDINGS, INC.) 05 January 2023 (2023-01-05)<br>See paragraphs [0095]-[0485]; and figures 1-33G. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 February 2025** | **27 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/017218**

| Patent document cited in search report | Publication date (day/month/year) | Patent family member(s) | Publication date (day/month/year) |
|---|---|---|---|
| KR 10-2338796 B1 | 13 December 2021 | CN 109802849 A | 24 May 2019 |
| | | CN 109802849 B | 08 March 2022 |
| | | CN 114500234 A | 13 May 2022 |
| | | EP 3713154 A1 | 23 September 2020 |
| | | JP 2021-503808 A | 12 February 2021 |
| | | JP 6984016 B2 | 17 December 2021 |
| | | US 10979884 B2 | 13 April 2021 |
| | | US 11381952 B2 | 05 July 2022 |
| | | US 2020-0322773 A1 | 08 October 2020 |
| | | US 2021-0227373 A1 | 22 July 2021 |
| | | WO 2019-096289 A1 | 23 May 2019 |
| US 2021-0112580 A1 | 15 April 2021 | CN 112771911 A | 07 May 2021 |
| | | CN 112771911 B | 11 June 2024 |
| | | EP 3777293 A1 | 17 February 2021 |
| | | EP 3777293 B1 | 24 July 2024 |
| | | JP 2021-516508 A | 01 July 2021 |
| | | JP 7096352 B2 | 05 July 2022 |
| | | KR 10-2020-0131891 A | 24 November 2020 |
| | | KR 10-2342232 B1 | 21 December 2021 |
| | | US 10904910 B2 | 26 January 2021 |
| | | US 11653352 B2 | 16 May 2023 |
| | | US 12177839 B2 | 24 December 2024 |
| | | US 2019-0320455 A1 | 17 October 2019 |
| | | US 2023-0108837 A1 | 06 April 2023 |
| | | WO 2019-196933 A1 | 17 October 2019 |
| US 2023-0007624 A1 | 05 January 2023 | BR 112022011043 A2 | 23 August 2022 |
| | | CN 114930984 A | 19 August 2022 |
| | | EP 4070621 A1 | 12 October 2022 |
| | | KR 10-2022-0110811 A | 09 August 2022 |
| | | WO 2021-113581 A1 | 10 June 2021 |

Form PCT/ISA/210 (patent family annex) (July 2022)